# EUROPEAN PATENT SPECIFICATION

(11) **EP 3 963 369 B1**
(45) Date of publication and mention of the grant of the patent: **18.11.2026**
(21) Application number: 20723836.1
(22) Date of filing: 30.04.2020
(51) Int. Cl.: G01T 1/167, G01T 7/04

(54) **DETECTION SYSTEM FOR IONIZING RADIATION**
DETEKTIONSSYSTEM FÜR IONISIERENDE STRAHLUNG
SYSTÈME DE DÉTECTION POUR RAYONNEMENT IONISANT

(30) Priority: 30.04.2019 DE 102019111155
(43) Date of publication of application: 09.03.2022
(73) Proprietor: Hochschule Mannheim, 68163 Mannheim (DE)
(72) Inventor: SCHERER, Ulrich, 52428 Jülich (DE); KRUPP, Dominik, 52441 Rödingen (DE)
(74) Representative: Lucke, Andreas
(86) International application number: PCT/EP2020/062112
(87) International publication number: WO 2020/221890

(56) References cited:
- DE-A1- 2 143 900
- US-A- 3 891 844
- US-A- 4 920 263
- US-A- 5 652 013
- US-A1- 2002 185 613
- CONROY DAVID ET AL: "Nanostructured surfaces for sensing heavy metals and radionuclides in aqueous systems", 1 October 2012 (2012-10-01), XP93116561, Retrieved from the Internet <URL:https://etheses.whiterose.ac.uk/4164/> [retrieved on 20240108]
- DOMINIK KRUPP ET AL: "Prototype development of ion exchanging alpha detectors", NUCLEAR INSTRUMENTS & METHODS IN PHYSICS RESEARCH. SECTION A, vol. 897, 1 July 2018 (2018-07-01), NL, pages 120 - 128, XP055705299, ISSN: 0168-9002, DOI: 10.1016/j.nima.2018.04.038
- ASWAL D K ET AL: "Self assembled monolayers on silicon for molecular electronics", ANALYTICA CHIMICA ACTA, ELSEVIER, AMSTERDAM, NL, vol. 568, no. 1-2, 24 May 2006 (2006-05-24), pages 84 - 108, XP027912655, ISSN: 0003-2670, [retrieved on 20060524]
- RHIJN W M ET AL: "Sulfonic acid functionalised ordered mesoporous materials as catalysts for condensation and esterfication reactions", CHEMICAL COMMUNICATIONS, CHEMICAL SOCIETY, LONDON, GB, 1 January 1998 (1998-01-01), pages 317 - 318, XP002321174, ISSN: 0009-241X
- MOHAMUD H ET AL: "Progress towards the development of a rapid analytical approach for separation of226Ra using dibenzo-18-crown-6 ether functionalised silica (SiO2) disks", RADIATION PHYSICS AND CHEMISTRY, vol. 140, 9 February 2017 (2017-02-09), pages 57 - 60, XP085168867, ISSN: 0969-806X, DOI: 10.1016/J.RADPHYSCHEM.2017.02.020

## Description

### FIELD OF THE INVENTION

The present invention is in the field of nuclear chemistry. In particular, the invention relates to the detection of ionizing radiation.

### BACKGROUND

Ionizing radiation like alpha particles, beta particles, x-rays or gamma rays may be created by the radioactive decay of atomic nuclei, which is exploited in a variety of applications, ranging from nuclear power to medical radiation therapy. Due to the high energy of the particles, ionizing radiation may ionize atoms or molecules and may thus be harmful to humans. Therefore, reliable means for the quantitative detection of ionizing radiation are of great importance.

Ionizing radiation can for example be detected with Geiger counters, scintillation detectors or semiconductor detectors, which may allow for determining a particle flux or energy spectrum of the ionizing radiation. In particular for alpha particles, however, the short range of the radiation complicates a reliable detection, e.g. for high-resolution alpha particle spectroscopy. In many cases, a time-consuming sample preparation and measurement with complex equipment may be required. Samples may for example be prepared using electrodeposition from a solution onto a substrate, which may then be transferred to a vacuum chamber for measurement. In Mohamud et al., Radiat. Phys. Chem. 140, 57 (2017*),* a functionalized silicon dioxide disk was used as a substrate to adsorb ²²⁶Ra and a spectrum of alpha particles emitted by the adsorbed ²²⁶Ra was subsequently measured using a separate semiconductor detector. Yet, results may vary due to fluctuating yields and low counting rates. Furthermore, such methods may not be suitable for detecting isotopes with a short half-life due to the long preparation times of the samples.
US 3,891,844 A discloses a method for non-destructively testing a surface of an object for substantially invisible surface voids by adsorbing a radioactive gas thereon, wherein a chill set coating of substantially uniform thickness is provided on the surface of the object for immobilizing the radioactive gas.
DE 21 43 900 A1 discloses an apparatus for detecting iodine in ambient air that comprises an activated carbon filter for adsorbing iodine and a scintillating crystal surrounded by the activated carbon filter.
US 4,920,263 A discloses a radon detection system for monitoring environmental parameters in ambient air, wherein the radon detection system comprises a scintillation cell coated with a fluorescent material.
D. K. Aswal et al., Analytica Chimica Acta 568 (2006), 84-108 provides an overview of various aspects of the self-assembly of organic monolayers on silicon substrates for molecular electronics applications.
W. M. van Rhijn et al., Chem. Commun., 1998, 317-318 reports on the functionalization of mesoporous silicas with sulfonic groups as catalysts for the formation of bisfurylalkanes and polyol esters.
US 2002/0185613 A1 discloses a radiation source for calibrating nuclear imaging equipment, wherein the radiation source comprises a substrate upon which a radioactive pattern is deposited by fixation using a binding agent and/or a sealing layer.
US 5,652,013 A discloses a method and apparatus for increasing the deposition of ions onto a surface, such as the adsorption of uranium ions on the detecting surface of a radionuclide detector. The method includes the step of exposing the surface to a complexing agent, such as a phosphate ion solution, which has an affinity for the dissolved species to be deposited on the surface. This provides, for example, enhanced sensitivity of the radionuclide detector.
D. J. R. Conroy, Nanostructured surfaces for sensing heavy metals and radionuclides in aqueous systems, PhD Thesis (University of Leeds), 2012 reports on engineered nanostructured surfaces with specificities for a number of radioactive waste contaminants such as bulk metal oxide and silica dioxide surfaces functionalized by condensing functional silanes thereon, wherein the amount of radionuclide bound was quantified using scintillation counting.

### SUMMARY OF THE INVENTION

The object of the invention is thus to provide a device and methods that facilitate a fast and reliable detection of ionizing radiation.

This object is met by a detection system for ionizing radiation according to claim 1, a method of manufacturing a detection system for ionizing radiation according to claim 6, a method of detecting ionizing radiation according to claim 10, a detection chamber for detecting ionizing radiation by liquid scintillation counting according to claim 13, and a method of detecting ionizing radiation by liquid scintillation counting according to claim 14. Embodiments of the present invention are detailed in the dependent claims.

The detection system for ionizing radiation comprises a detector with a detection surface. The detector is configured to detect ionizing radiation that is incident on the detection surface. An adsorption layer is provided on said detection surface, the adsorption layer being configured to bind target particles, wherein the target particles are radioactive atoms or molecules.

Preferably, the detector is a semiconductor detector as detailed below. In other examples, the detector may be a gaseous ionization detector such as a proportional counter or a Geiger counter or may be a scintillation detector. The detector may comprise a detection zone, in which the ionizing radiation is to be detected, e.g. a p-n junction in a semiconductor detector, an ionization chamber in a gaseous ionization detector or a scintillation crystal in a scintillation detector. The detection zone may be configured to generate a measurement signal, in particular an electric measurement signal, when ionizing radiation reaches the detection zone, e.g. through the generation of electron-hole pairs in a semiconductor detector or the ionization of particles in an ionization chamber. The detection surface is a surface of the detector that is configured to transmit ionizing radiation incident on the detection surface, e.g. to the detection zone. Preferably, an absorption probability of the ionizing radiation in the detection surface is less than 5%, in one example less than 1% of an absorption probability in the detection zone.

The adsorption layer may for example be a coating or film that is deposited on the detection surface. The adsorption layer is configured to bind target particles e.g. from a liquid or gaseous sample medium in contact with the adsorption layer. Thereby, the adsorption layer allows for immobilizing target particles in the vicinity of the detection surface, where the target particles may undergo a radioactive decay and emit ionizing radiation. Due to the small distance between a target particle bound by the adsorption layer and the detection surface, an absorption probability and/or scattering probability for the ionizing radiation between the point of emission and the detection zone of the detector may be reduced and the solid angle covered by the detection zone may be increased. This may increase a detection efficiency and spectral resolution of a measurement, in particular for short-range radiation like alpha particles and x-rays. Preferably, the adsorption layer covers the entire detection surface.

In a preferred embodiment, the adsorption layer is configured to bind the target particles by chemisorption, i.e. the adsorption layer may be configured to adsorb target particles on its surface through the formation of chemical bonds with the target particles, e.g. through ion exchange reactions, complexation or the formation of hydrogen bonds. Additionally or alternatively, the adsorption layer may be configured to adsorb target particles by physisorption, i.e. through van der Waals interaction between the surface of the adsorption layer and the target particles. In some examples, the adsorption layer may also absorb the target particles, i.e. the target particles may permeate the adsorption layer.

Preferably, the adsorption layer is attached to the detection surface through chemical bonds between the adsorption layer and the detection surface. In other words, the adsorption layer may be deposited directly onto the detection surface and may be connected to the detection surface by forming chemical bonds with the detection surface.

A thickness of the adsorption layer may be less than 20 nm, preferably less than 10 nm. This may be advantageous to reduce an absorption probability or scattering probability of the ionizing radiation within the adsorption layer. Preferably, the thickness of the adsorption layer varies by less than 50%, in some examples less than 25% over the extent of the adsorption layer.

In a preferred embodiment, the adsorption layer is a monomolecular layer of adsorbent molecules, in particular ion exchangers or complexing agents, wherein the adsorbent molecules are configured to form chemical bonds with the target particles. In other examples, the adsorption layer may comprise multiple layers of adsorbent molecules, see e.g. D. Krupp et al., Nuclear Inst. and Methods in Physics Research, A 897, 120 (2018*),* where the formation of a thiol-functionalized silane multilayer on a silicon charged-particle detector was reported. The adsorbent molecules may for example comprise a head group configured to form a chemical bond with the detection surface and a linker chain connecting the head group to a functional group that is configured to form a chemical bond with a target particle. The head group may for example comprise a compound selected from the group consisting of silanes (SiX₃), azides (N₃X), alkenes, alkynes and bifunctional thiols. The linker chain may for example comprise an alkyl chain ((CH₂)ₙ), cyclic alkyl groups, aromatic groups and/or triazole-based groups. The functional group may for example be a cation exchanger or an anion exchanger. The functional group may e.g. comprise a compound selected from the group consisting of sulfonic acid (SO₃H), quaternary ammonium salts (NR₄X), complexation agents such as diglycolamide derivates like N,N,N',N'-tetraoctyl diglycolamide (TODGA), crown ether, tributyl phosphate derivates, ionic liquids such as 1-methylimidazol derivates, pyrrolidine, β-diketones, cavitand-groups like calixarene, cryptands, clathrate and bioactive substances like antibodies, proteins and nucleotides.

The detector may in particular be configured to detect x-ray photons and/or alpha particles that are incident on the detection surface. Accordingly, the target particles may be x-ray-emitting and/or alpha-emitting particles and may e.g. be or comprise a radioisotope selected from the group consisting of the decay products of the thorium (4n) series, the neptu-nium (4n+1) series, the uranium (4n+2) series, the actinium (4n+3) series, the actinide series and the transactinide series as well as cyclotron-produced radionuclides and their decay products. The target particles may in particular be or comprise uranium, thorium, plutonium, americium, radon, actinium or radium. Alternatively or additionally, the detector may also be configured to detect other types of ionizing radiation, for example beta particles, gamma radiation and/or X rays.

In a preferred embodiment, the detector is a semiconductor charged-particle detector, in particular a silicon charged-particle detector or a germanium charged-particle detector. The semiconductor charged-particle detector may comprise a semiconductor diode, e.g. a p-n junction diode or a PIN diode having a p-doped, an intrinsic and an n-doped layer. The semiconductor charged-particle detector may further comprise conducting contacts, e.g. metallic contact pads that are in contact with the semiconductor diode or connected to the semiconductor diode through conduction lines or wires. The detection surface of a semiconductor charged-particle detector may for example be a passivated surface of the semiconductor diode and may e.g. consist of or comprise a silicon dioxide layer or a germanium dioxide layer. Alternatively, the detection surface of a semiconductor charged-particle detector may for example be a dead layer deposited on a surface of the semiconductor diode and may e.g. consist of or comprise gold or aluminum. The semiconductor charged-particle detector may in particular be an unsealed or unpackaged semiconductor diode without a frame or housing, i.e. the semiconductor structure, the passivated surface, conduction lines and/or conducting contacts of the semiconductor diode may be exposed at least in part.

The adsorption layer may comprise functionalized silanes, e.g. adsorbent molecules comprising a silane head group, and/or functionalized azides, e.g. adsorbent molecules comprising a azide head group. The functionalized silanes may for example be derived from (3-mercaptopropyl)trimethoxysilane (MPTMS), (3-aminopropyl)trimethoxysilan (APTMS), (3-aminopropyl)triethoxysilane (APTES) or 3-(Triethoxysilyl)propyl isocyanate (TESPI). This may facilitate attaching the adsorption layer to the detection surface of a semiconductor charged-particle detector, e.g. via chemical bonds between the functionalized silanes and an hydroxylated silicon dioxide surface. In one example, the adsorption layer is a monomolecular layer of functionalized silanes, e.g. sulfonic acid-functionalized silanes.

The detection system further comprises a flow cell, wherein the detector is mounted in the flow cell such that the detection surface of the detector is in contact with an inner volume of the flow cell. The detector may for example be attached to or integrated in a side wall of the inner volume of the flow cell. The flow cell may be used to provide a sample medium containing target particles such that the sample medium is in contact with the adsorption layer of the detector and target particles may be adsorbed or absorbed by the adsorption layer.

The flow cell comprises an input fluid connector and an output fluid connector, wherein the input and output fluid connectors are in communication with the inner volume of the flow cell, e.g. through fluid channels connecting the inner volume to the input and output fluid connectors. The input and output fluid connectors are configured to receive a sample medium, in particular a fluid sample medium, e.g. through a tube connected to the respective connector. The input and output fluid connectors may be configured to be removably connected to a tube or an external connector, e.g. via a threaded or non-threaded tube fitting. Preferably, the input and output fluid connectors are standardized connectors, e.g. comprising an ISO metric screw thread or a Unified Thread Standard (UTS) thread. In some examples, the input and/or output fluid connector is/are configured to be connected to a fluid connector of another flow cell, e.g. such that multiple flow cells may be connected in series to create a continuous fluid path. The input and output fluid connectors may for example be a matching pair of a male and female connector, respectively.

The flow cell may also comprise an electrical connector that is electrically coupled to the detector and is configured to be removably connected to an external device such that the detector is electrically coupled to the external device. The external device may for example be a measuring device configured to read-out a measurement signal from the detector as detailed below. The electrical connector may be configured to be removably connected to the external device through a cable and may e.g. be a BNC or SMA connector. In other examples, the electrical connector may be configured to provide a rigid mechanical connection to the external device and may for example comprise conducting pins to be inserted into the external device and/or may comprise a recess or cut-out with a conducting contact to receive a pin of the external device. Alternatively or additionally, the electrical connector and/or the flow cell may e.g. comprise a hook, clip or screw to removably attach the flow cell to the external device.

The detection system may further comprise a measuring device with a controller, wherein the controller is configured to read out a measurement signal from the detector when the detector is electrically coupled to the measuring device. The measuring device may for example be configured to be electrically coupled to the detector through the electrical connector of the flow cell, e.g. via a cable or pins as described above. Such a modular setup may allow for using multiple flow cells with a single measuring device, e.g. flow cells comprising detectors with different adsorption layers and/or for testing different sample media. In some examples, measuring device may be configured to be connected to multiple flow cells and/or multiple detectors simultaneously. The measuring device may comprise a measuring instrument, in particular a voltmeter or ammeter, that is configured to perform a measurement of the measurement signal and provide the measured value to the controller. The measuring instrument may furthermore be configured to apply a control signal, in particular a voltage to the detector, e.g. a bias voltage for a semiconductor diode.

In a preferred embodiment, the controller is configured to determine an energy spectrum of the ionizing radiation incident on the detection surface of the detector from the measurement signal of the detector, e.g. from the measured values received from the measurement instrument. In some examples, the measurement signal may be an electric current or voltage. An ionizing particle incident on the detection surface may for example generate a current or voltage spike, which may also be referred to as an event in the following. The controller may be configured to determine an energy of the ionizing particle from an amplitude or time-integrated amplitude of electric current or voltage. The controller may in particular be configured to determine an energy spectrum of the ionizing radiation from a plurality of events detected by the detector.

The controller may furthermore be configured to determine a time trace of the ionizing radiation incident on the detection surface of the detector from the measurement signal of the detector. The time trace may for example be a rate of events as a function of time. The controller may e.g. be configured to log an event sequence of events detected by the detector, wherein the event sequence may e.g. comprise a timestamp and an energy determined for each event detected by the detector. The controller may also be configured to determine a half-life of a substance from the time trace and/or to determine decay chain correlations such as alpha-alpha correlations.

The detector is a first detector and the detection system further comprises a second detector. The second detector is configured to detect ionizing radiation that is incident on a detection surface of the second detector. The second detector is also mounted in the flow cell such that the detection surface of the second detector is in contact with the inner volume of the flow cell. In one example, the detection system may comprise a plurality of detectors, e.g. between 3 and 10 detectors.

An adsorption layer is provided on the detection surface of the second detector, wherein the adsorption layer of the second detector is configured to bind target particles. The adsorption layer of the second detector may be similar to the adsorption layer of the first detector, i.e. may be configured to bind to the same type of target particles. Using the second detector may thus increase the detection efficiency for target particles by increasing the area of covered by the detectors.

In the detection system for ionizing radiation as claimed, the adsorption layers of the first and second detectors exhibit different adsorption properties with respect to various types of target particles, namely the adsorption layer of the first detector is configured to bind target particles of a first type and the adsorption layer of the second detector is configured to bind target particles of a second type. Target particles of the first type may for example be radioisotopes of a first type or molecules comprising a radioisotope of the first type and target particles of the second type may for example be radioisotopes of a second type or molecules comprising a radioisotope of the second type. In particular, the adsorption layer of the first detector is configured to bind target particles of the first type, but not target particles of the second type and the adsorption layer of the second detector is configured to bind target particles of the second type, but not target particles of the first type. This may allow for performing independent measurements for target particles of the first and second type using the first and second detector, respectively. In some examples, a plurality of detectors may be used, each of which comprises an adsorption layer that is configured to selectively bind a certain type of target particles.

In one example, the first and second detectors may be mounted in the flow cell such that the detection surface of the second detector faces the detection surface of the first detector. The detection surfaces of the first and second detectors may be parallel or may be inclined with respect to each other by an angle of less than 5°, preferably less than 1°. This may increase the solid angle covered by the detectors since the first detector may detect ionizing radiation emitted by a target particle bound to the adsorption surface of the second detector and vice versa. In particular for short-range ionizing radiation like alpha particles, a small distance between the detection surfaces may be advantageous. A distance between the detection surfaces of the first and second detectors may for example be less than 30 µm, preferably less than 10 µm.

The invention furthermore relates to a method of manufacturing a detection system for ionizing radiation. The method comprises providing a detector with a detection surface, wherein the detector is configured to detect ionizing radiation that is incident on the detection surface. The method further comprises depositing an adsorption layer onto the detection surface, the adsorption layer being configured to bind target particles, wherein the target particles are radioactive atoms or molecules.

As in the detection system described above, the detector may for example be a semiconductor detector, a gaseous ionization detector or a scintillation detector and may comprise a detection zone that is configured to generate a measurement signal when ionizing radiation reaches the detection zone. The detector may in particular be an unsealed semiconductor diode, e.g. a silicon PIN diode as detailed below. The detection surface is a surface of the detector that is configured to transmit ionizing radiation incident on the detection surface, e.g. to the detection zone. In one example, the detection surface may be a passivation layer, e.g. a silicon dioxide layer, on a semiconductor diode or a dead layer, e.g. comprising or consisting of gold or aluminum, on a semiconductor diode.

The adsorption layer is configured to bind target particles e.g. from a liquid or gaseous sample medium in contact with the adsorption layer. The adsorption layer may for example be formed on the detection surface by depositing an adsorption material or adsorption substance onto the detection surface that is configured to bind target particles. In some examples, the adsorption layer may be formed on the detection surface by depositing a precursor material or precursor substance onto the detection surface, which is subsequently transformed to the adsorption material, e.g. through a chemical reaction. The adsorption layer may for example be deposited onto the detection surface by chemical deposition. In one example, the adsorption layer may be deposited by chemical solution deposition by exposing the detection surface to a solution containing the adsorption material or a precursor thereof. In a preferred embodiment, the adsorption layer is deposited by chemical vapor deposition by exposing the detection surface to a gas containing the adsorption material or a precursor thereof.

Depositing the adsorption layer onto the detection surface may in particular comprise grafting adsorbent molecules, in particular ion exchangers or complexing agents, onto the detection surface, wherein the adsorbent molecules are configured to chemically bind to the target particles. In a preferred embodiment, the adsorption layer is a monomolecular layer of the adsorbent molecules. Grafting adsorbent molecules onto the detection surface comprises forming chemical bonds between the detection surface and the adsorbent molecules, e.g. a head group of the adsorbent molecules, and may further comprise forming chemical bonds between adjacent adsorbent molecules. As described above, the adsorbent molecules may for example comprise a head group configured to form a chemical bond with the detection surface and a linker chain connecting the head group to a functional group that is configured to form a chemical bond with a target particle. The head group may for example comprise a compound selected from the group consisting of silanes (SiX), azides (N₃X), alkenes, alkynes and bifunctional thiols. The linker chain may for example comprise an alkyl chain ((CH₂)ₙ), cyclic alkyl groups, aromatic groups and/or triazole-based groups. The functional group may for example be a cation exchanger or an anion exchanger. The functional group may e.g. comprise a compound selected from the group consisting of sulfonic acid (SO₃H), quaternary ammonium salts (NR₄X), complexation agents such as diglycolamide derivates like N,N,N',N'-tetraoctyl diglycolamide (TODGA), crown ether, tributyl phosphate derivates, ionic liquids such as 1-methylimidazol derivates, pyrrolidine, β-diketones, cavitand-groups like calixarene, cryptands, clathrate and bioactive substances like antibodies, proteins and nucleotides.

In one example, the adsorbent molecules are grafted by chemical vapor deposition at a temperature between 20°C and 70°C, preferably between 30°C and 50°C. Using a low temperature may reduce the risk of damaging the detector during the deposition of the adsorption layer. The temperature for the chemical vapor deposition may in particular be chosen to be well below the boiling point of the adsorption substance. In some examples, the temperature for the chemical vapor deposition may be chosen such that the vapor pressure of the adsorption substance is between 0.01 mbar and 20 mbar, preferably between 1 mbar and 5 mbar.

In some embodiments, grafting the adsorbent molecules onto the detection surface comprises grafting linker molecules onto the detection surface and transforming the linker molecules to the adsorbent molecules by modifying a functional group of the linker molecules such that the functional group is configured to chemically bind to a target particle. The linker molecules may for example comprise a head group configured to form a chemical bond with the detection surface and a linker chain connecting the head group to the functional group of the linker molecule. The head group and/or linker chain of the linker molecules may correspond to the head group and linker chain, respectively, of the adsorbent molecules. The functional group of the linker chain may e.g. comprise a compound selected from the group consisting of thiol (SH), amines (NR2; R = H-; alkyl-, aryl-), halogenides (e.g. -Cl), alkoxy groups, alkene, alkyne, hydroxides, ester, aldehydes, ketones, carboxylic acids, boronic acid pinacol ester, phosphonates, nitrile, isocyanate, thiocyanate, isothiocyanate, nitro, azo, aromatic, epoxy, glycidyl, methacryloxymethyl and imidazol. In some examples, the linker molecules may not comprise a functional group and may be transformed to the adsorption molecules by adding a functional group to the linker molecules that is configured to chemically bind to a target particle. The linker molecules may for example be (3-mercaptopropyl)trimethoxysilane (MPTMS), (3-aminopropyl)trimethoxysilan (APTMS), (3-aminopropyl)triethoxysilane (APTES) or 3-(Triethoxysilyl)propyl isocyanate (TESPI).

Depositing the adsorption layer onto the detection surface may further comprise curing the detection surface in the presence of water vapor at a temperature between 30°C and 70°C, preferably between 40°C and 60°C . This may improve the homogeneity of the adsorption layer by filling vacancies within the adsorption layer and/or binding or removing unbound adsorbent molecules. As for the chemical vapor deposition, curing at a low temperature may reduce the risk of damaging the detector during the curing.

As mentioned above, the detector may be an unsealed or unpackaged semiconductor diode, in particular a silicon PIN diode, i.e. the semiconductor structure, the passivation layer, conduction lines and/or conducting contacts of the semiconductor diode may be exposed at least in part. Using an unsealed semiconductor diode may allow for reducing the distance between the adsorption layer and the detection zone of the detector, i.e. the p-n junction of the semiconductor diode, and may simplify integration of the detector into a device, e.g. a flow cell. On the other hand, unsealed semiconductor diodes are fragile and prone to damage. The method according to the invention facilitates the deposition of an adsorption layer onto an unsealed semiconductor diode by employing gentle processing techniques at low temperatures.

The adsorption layer, in particular the adsorbent molecules, may comprise a functionalized silane or a functionalized azide. The adsorbent molecules may e.g. comprise or consist of a silane head group linked to a functional group by a linker chain. The adsorbent molecules may for be derived from (3-mercaptopropyl)trimethoxysilane (MPTMS), (3-aminopropyl)trimethoxysilan (APTMS), (3-aminopropyl)triethoxysilane (APTES) or 3-(Triethoxysilyl)propyl isocyanate (TESPI). As described above, this may facilitate attaching the adsorption layer to the detection surface of a semiconductor charged-particle detector, e.g. via chemical bonds between the functionalized silanes and a hydroxylated silicon dioxide surface. In one example, the adsorbent molecules are sulfonic acid-functionalized silanes.

The method may further comprise chemically activating the detection surface by plasma treatment, ozone treatment, UV irradiation or a combination thereof. Thereby, the detection surface may be cleaned by removing contaminants and docking sites for adsorbent molecules and/or linker molecules may be created, e.g. by hydroxylation of the detection surface.

In one example, chemically activating the detection surface comprises exposing the detection surface to a water plasma. In one example, the detection surface is exposed to the water plasma at a temperature between 10°C and 40°C, preferably between 20°C and 30°C. A low pressure water plasma may allow for a gentle cleaning and hydroxylation of the detection surface without damaging the detector. Other cleaning methods, e.g. using plasma etching, RCA clean or a piranha solution comprising sulfuric acid and hydrogen peroxide, may in particular affect exposed portion of the detector such as conduction lines and/or conducting contacts. Using water plasma may also reduce the probability of damaging the detector compared treatment of the detection surface with other plasmas, for example oxygen plasma.

The method further comprises mounting the detector in a flow cell such that the detection surface of the detector is in contact with an inner volume of the flow cell. The detector may for example be attached to or integrated into a side wall of the inner volume of flow cell, e.g. using glue or a mechanical mounting structure comprising a fastener. This may further comprise connecting conducting contacts of the detector to an electrical connector of the flow cell.

The invention furthermore provides a method of detecting ionizing radiation. The method comprises (1) providing a detector with a detection surface and an adsorption layer provided on said detection surface, wherein the detector is configured to detect ionizing radiation that is incident on the detection surface and the adsorption layer is configured to bind target particles, wherein the target particles are radioactive atoms or molecules; (2) binding target particles to the adsorption layer; and (3) detecting ionizing radiation incident on the detection surface with the detector. The numbering of steps is for clarity only and does not imply a certain order of execution of the method. As far as technically feasible, steps of the method may be permuted and may in particular be performed simultaneously at least in part.

The detector is a detector according to one of the embodiments of the invention described above. Providing the detector may in particular comprise providing a flow cell that the detector is mounted in. In other examples, the detector may be provided as a separate device, i.e. without a flow cell.

Detecting ionizing radiation incident on the detection surface of the detector may comprise measuring a measurement signal generated by the detector, e.g. an electric current or voltage generated by the detector upon absorption or scattering of an ionizing particle in the detection zone. In one example, detecting ionizing radiation incident on the detection surface may comprise detecting events, wherein an event may for example be defined as an increase of the measurement signal beyond a predetermined threshold. Additionally, an energy of an ionizing particle may be determined, e.g. by determining an amplitude or time-integrated amplitude of the measurement signal for an event. In some examples, a rate of events may be determined from the measurement signal, e.g. by counting events or from an amplitude of the measurement signal.

The target particles may for example be bound to the adsorption layer by chemisorption, e.g. through the formation of chemical bonds between adsorbent molecules in the adsorption layer, in particular a functional group of the adsorbent molecules, and the target particles. In other examples, the target particles may additionally or alternatively be bound to the adsorption surface by physisorption and/or may be absorbed by the adsorption layer.

The method may further comprise providing a fluid sample medium, e.g. a solution, containing the target particles such that the adsorption layer is in contact with the sample medium. Thereby, target particles in the sample medium may be adsorbed or absorbed by the adsorption layer. Providing the fluid sample medium may comprise generating a flow of the sample medium through the inner volume of a flow cell. A flow velocity of the flow may be adapted to a shape and/or size of the inner volume, for example the distance between the adsorption layers of the first and second detectors, e.g. to ensure that the sample medium covers the entire adsorption layers. In some examples, the sample medium may contain the target particles in an ionized form. Binding the target particles to the adsorption layer may comprise an ion exchange between the adsorption layer and the sample medium. The ion exchange may e.g. comprise the adsorption of an ionized target particle by an adsorbent molecule and the corresponding release of an ion or ionized molecule from the adsorbent molecule to the sample medium. Alternatively, binding the target particles to the adsorption layer may comprise a complexation between a molecule in the adsorption layer and a target particle from the sample medium.

In some examples, the sample medium may contain precursor radioisotopes or precursor molecules comprising a radioisotope. Providing the fluid sample may comprise transforming the precursor radioisotopes or precursor molecules to the target particles, e.g. to facilitate or enable binding to the adsorption layer as the adsorption layer may not bind precursor radioisotopes or precursor molecules. Preferably, an equilibrium constant of the binding reaction between the target particles and the adsorption layer is larger than 10, in some examples larger than 100.

If the detector is mounted in a flow cell, the method may further comprise connecting the flow cell to a measuring device that is configured to read out a measurement signal from the detector. The measuring device may subsequently be used to quantitatively analyze the ionizing radiation incident on the detection surface, e.g. to obtain a rate of events, a time trace, an energy spectrum and/or a half-life of a substance. The method may furthermore comprise disconnecting the flow cell from the measuring device, e.g. such that the method can be repeated subsequently using a different flow cell.

The method may also comprise determining an energy spectrum of the ionizing radiation incident on the detection surface, e.g. using the measuring device. Determining the energy spectrum of the ionizing radiation incident on the detection surface may comprise determining the energy of ionizing particles, e.g. from an amplitude or time-integrated amplitude of the measurement signal associated with an event, wherein the energy spectrum may be obtained from the particle energies of a plurality of events. The method may further comprise determining a continuous background spectrum in the measured energy spectrum and subtracting the continuous background spectrum from the measured energy spectrum. The continuous background spectrum may for example arise from ionizing radiation emitted by target particles in the sample medium that are not bound by the adsorption surface. Subtracting the continuous background spectrum may thus allow for isolating the contribution of target particles bound by the adsorption surface. This may improve the spectral resolution. The continuous background spectrum may for example be determined by fitting a background function to the measured energy spectrum or a part thereof or performing a reference measurement with a detector without an adsorption layer.

In some examples, the method may further comprise removing target particles bound to the adsorption layer, e.g. to regenerate the detector after ionizing radiation incident on the detection surface has been detected. This may allow for re-using the detector for multiple measurements by repeatedly executing the method. Removing target particles bound to the adsorption layer may comprise rinsing the adsorption layer with a regeneration fluid, which may e.g. comprise hydrochloric acid.

The method may be used to selectively detect target particles of a specific type. The detector is a first detector and the target particles are target particles of a first type, e.g. comprising a radioisotope of a first type. The adsorption layer of the first detector is configured to bind target particles of the first type, but not target particles of a second type, wherein target particles of a second type may e.g. comprise a radioisotope of a second type. This may allow for selectively detecting target particles of the first type using the first detector without the measurement being influenced by the presence of target particles of the second type.

The method may also be used to detect target particles of different types. For this, the method comprises providing a second detector with a detection surface and an adsorption layer provided on said detection surface of the second detector, wherein the second detector is configured to detect ionizing radiation that is incident on the detection surface of the second detector and the adsorption layer of the second detector is configured to bind target particles of the second type, but not target particles of the first type. The method may further comprise binding target particles of the second type to the adsorption layer of the second detector and detecting ionizing radiation incident on the detection surface of the second detector with the second detector, e.g. as described above for the first detector.

The method may also comprise transforming precursor radioisotopes of the first type or precursor molecules comprising a radioisotope of the first type to target particles of the first type and transforming precursor radioisotopes of the second type or precursor molecules comprising a radioisotope of the second type to target particles of the second type, e.g. as described above.

### LIST OF FIGURES

In the following, a detailed description of the invention and exemplary embodiments thereof is given with reference to the figures. The figures show schematic illustrations of
Fig. 1a: a detection system for ionizing radiation according to an example useful for understanding the invention;
Fig. 1b: a detection system for ionizing radiation with a monomolecular adsorption layer in accordance with an example useful for understanding the invention;
Fig. 2a: a detection system for ionizing radiation comprising a flow cell according to an exemplary embodiment of the invention in a sectional top view;
Fig. 2b: the detection system for ionizing radiation of Fig. 2a in a sectional side view;
Fig. 3a: a detection system for ionizing radiation comprising a flow cell and a measuring device in accordance with an exemplary embodiment of the invention in a sectional top view;
Fig. 3b: the measuring device of the detection system for ionizing radiation of Fig. 3a in a sectional side view;
Fig. 4: a method of manufacturing a detection system for ionizing radiation in accordance with an embodiment of the invention;
Fig. 5: a method of detecting ionizing radiation in accordance with an embodiment of the invention;
Fig. 6: a background subtraction according to an embodiment of the invention;
Fig. 7a: a detection system for ionizing radiation comprising a flow cell according to an exemplary embodiment of the invention in a perspective view;
Fig. 7b: the detection system for ionizing radiation of Fig. 7a in an exploded view;
Fig. 7c: a bottom part of the detection system for ionizing radiation of Fig. 7a in an exploded view;
Fig. 8: a detection chamber for detecting ionizing radiation by liquid scintillation counting according to an exemplary embodiment of the invention; and
Fig. 9: a method of detecting ionizing radiation by liquid scintillation counting in accordance with an exemplary embodiment of the invention.

### DESCRIPTION OF THE PREFERRED EMBODIMENTS

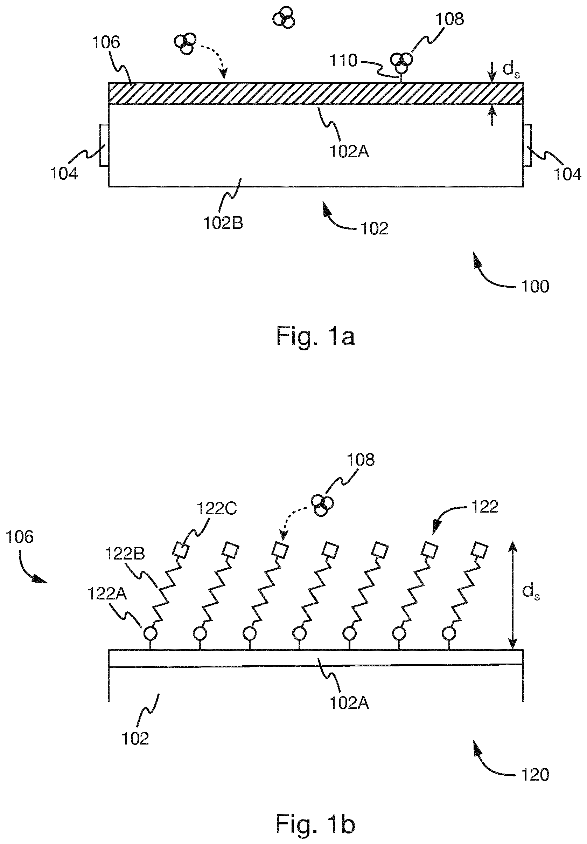

Fig. 1a depicts a sectional view of a detection system 100 for ionizing radiation according to an example useful for understanding the invention. The detection system 100 comprises a detector 102 that is configured to detect ionizing radiation incident on a detection surface 102A of the detector 102. The detector 102 comprises a detection zone 102B in which ionizing particles (not shown), in particular alpha particles and x-ray photons, are to be detected by creating an electric measurement signal at metallic contacts 104 of the detector 102. The detection surface 102A is configured to transmit ionizing radiation incident on the detection surface 102A to the detection zone 102B. In the example of Fig. 1, the detector 102 is a semiconductor charged-particle detector comprising a p-n junction (not shown), wherein one of the contacts 104 is connected to the p-doped region of the p-n junction and the other one of the contacts 104 is connected to n-doped region of the p-n junction, e.g. via a front side and back side electrode, respectively, as seen from the detection surface 102A. When an ionizing particle, for example an alpha particle, enters the detection zone 102B, the ionizing particle may generate electron-hole pairs in the p-n junction, which may be detected as a current or voltage at the metallic contacts 104. The metallic contacts 104 may furthermore be used to apply a bias voltage to the detector 102. A surface area of the detection surface 120A may for example be between 1 mm² and 3000 mm².

An adsorption layer 106 is provided on the detection surface 102A of the detector 102 such that the adsorption layer 106 covers the entire detection surface 102A. The adsorption layer 106 is configured to bind target particles 108, wherein the target particles 108 are radioactive atoms or molecules. In the example shown in Fig. 1a, the target particles 108 are adsorbed by chemisorption, i.e. the formation of chemical bonds 110 between the adsorption layer 106 and the target particles 108. In this way, target particles 108 may be localized in the immediate vicinity of the detection surface 102A. This may increase the probability of ionizing radiation emitted by the target particles 108 reaching the detection zone 102B due to the large solid angle covered by the detection zone 102B and the reduced absorption probability and/or scattering probability of the ionizing radiation between the emitting target particles 108 and the detection zone 102B. For this, a small thickness dₛ of the adsorption layer 106 may be advantageous. The thickness dₛ may for example be between 1 nm and 20 nm.

Fig. 1b depicts a zoomed-in sectional view of another detection system 120 for ionizing radiation according to an example useful for understanding the invention. The detection system 120 also comprises a detector 102 with a detection surface 102A similar to the detection system 100. In this example, the detector 102 is an unsealed PIN silicon diode comprising an intrinsic silicon layer sandwiched between a p-doped and an n-doped silicon layer. The PIN silicon diode is formed on a substrate (not shown), wherein the detection surface 102A consist of a hydroxylated silicon dioxide layer on top of the PIN diode structure. The detector 102 also comprises metallic contacts (not shown) that are connected to the p-doped and n-doped layers of the PIN diode through conduction lines, wherein the metallic contacts as well as parts of the conduction lines are exposed, i.e. not covered by a protective layer or housing.

In the example of Fig. 1b, the adsorption layer 106 consists of a monomolecular layer of adsorbent molecules 122. In this case, the thickness dₛ of the adsorption layer 106 is a fraction of the length of the adsorbent molecules 122, the fraction depending on the orientation of the adsorbent molecules 122. The thickness dₛ may thus for example be between 0.2 nm and 2 nm. In other examples, the adsorption layer 106 may consist of a multilayer structure of adsorbent molecules 122, for example a double layer or triple layer. A density of adsorbent molecules 122 in the adsorption layer 106 may for example be between 10¹² 1/mm² and 10¹³ 1/mm², thus providing a density of docking sites for target particles 108 in the same range.

Each of the adsorbent molecules 122 comprises a head group 122A that is configured to form a chemical bond with the hydroxylated silicon dioxide layer 102A. The head group may for example comprise a compound selected from the group consisting of silanes (SiX), azides (N₃X), alkenes, alkynes and bifunctional thiols. Each of the adsorbent molecules 122 further comprises a linker chain 122B, e.g. an alkyl chain ((CH₂)ₙ), that connects the head group 122A to a functional group 122C. The functional group 122C is configured to form chemical bonds with a target molecule 108. Accordingly, the functional group 122C may be chosen depending on the type of target molecule 108 to be adsorbed. The functional group may e.g. comprise a compound selected from the group consisting of sulfonic acid (SO₃H), quaternary ammonium salts (NR₄X), complexation agents such as diglycolamide derivates like N,N,N',N'-tetraoctyl diglycolamide (TODGA), crown ether, tributyl phosphate derivates, ionic liquids such as 1-methylimidazol derivates, pyrrolidine, β-diketones, cavitand-groups like calixarene, cryptands, clathrate and bioactive substances like antibodies, proteins and nucleotides. The adsorbent molecules 122 may for example be based on (3-mercaptopropyl)trimethoxysilane or (3-aminopropyl)trimethoxysilane.

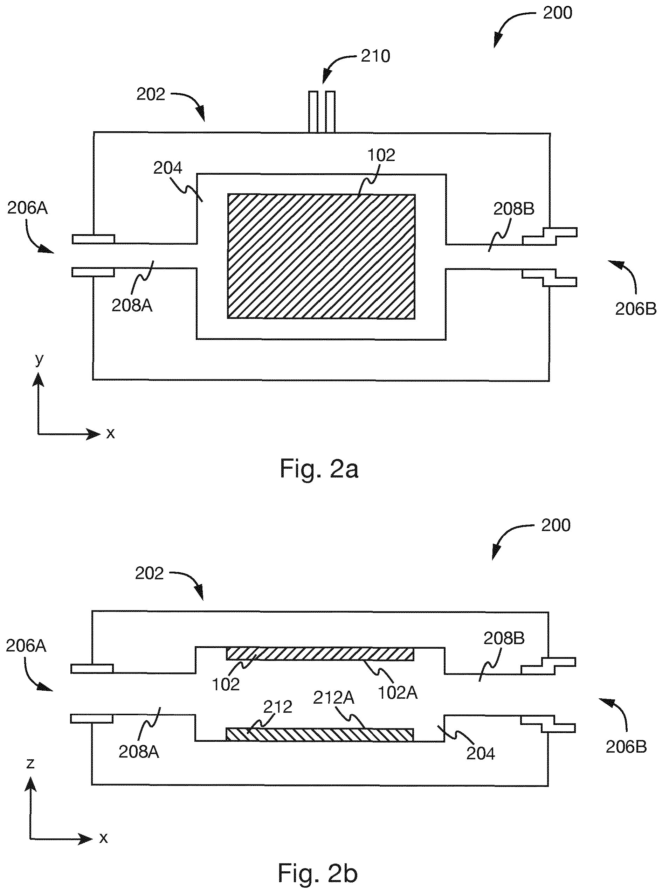

Figs. 2a and 2b illustrate another example of a detection system 200 for ionizing radiation. Fig. 2a shows a sectional top view of the detection system 200 in the x-y plane parallel to a detection surface of the detection system 200 and Fig. 2b shows a sectional side view of the detection system 200 in the x-z plane perpendicular to the detection surface of the detection system 200.

The detection system 200 comprises a detector 102 configured to detect ionizing radiation, which may for example be similar to the detector 102 of Fig. 1a or Fig. 1b. In particular, the detector 102 has a detection surface 102A with an adsorption layer 106 (not shown) provided thereon, wherein the adsorption layer 106 is configured to bind target particles 108. The detection system 200 further comprises a flow cell 202 which encloses an inner volume 204. The flow cell 202 may for example comprise or consist of glass, plastic, metal or a combination thereof. The inner volume 204 may for example have a volume between 1 mm³ and 1000 mm³. The detector 102 is mounted in the flow cell 202 such that the adsorption layer 106 on the detection surface 102A is in contact with the inner volume 204. In the example shown in Figs. 2a and 2b, the detector 102 is attached to an upper side wall of the inner volume 204.

The flow cell 202 comprises a pair of fluid connectors, a male connector 206A and a corresponding female connector 206B, which are arranged on opposing side faces of the flow cell 202. Accordingly, the flow cell 202 may be connected to another flow cell (not shown) through the connector 206A and/or 206B. The connectors 206A and 206B are in communication with the inner volume 204 of the flow cell 202 via two fluid channels 208A and 208B, which may for example have a cross-sectional area between 1 mm² and 100 mm². A sample medium can be supplied to the inner volume 204 through a tube (not shown) or another flow cell connected to one of the connectors 206A, 206B.

The flow cell 202 further comprises an electrical connector 210. The electrical connector 210 provides an electrical connection to the detector 102 mounted in the flow cell 202. In the example shown in Figs. 2a and 2b, the electrical connector 210 comprises two pins, which are electrically coupled to two contact pads (not shown) of the detector 102 and may be used to apply a voltage or current to the detector 102 and/or measure a voltage or current through the detector 102. The electrical connector 210 is configured to be removably connected to an external device (not shown) in order to electrically couple the detector to the external device, e.g. through a cable connected to the electrical connector 210.

The detection system 200 also comprises a second detector 212. The second detector 212 comprises a detection surface 212A and is configured to detect ionizing radiation that is incident on the detection surface 212A. The second detector 212 is mounted in the flow cell 202 such that the detection surface 212A of the second detector 212 faces the detection surface 102A of the detector 102. The second detector 212 may also be similar to one of the detectors 102 shown in Fig. 1a and Fig. 1b.

In particular, an adsorption layer (not shown) that is configured to bind target particles 108 is provided on the detection surface 212A. The adsorption layers of the second detector 212 and the detector 102, which in the following may also be referred to as the first detector 102, are configured to selectively bind to different types of target particles, e.g. different types of radioisotopes or molecules comprising different types of radioisotopes. In other words, the adsorption layer 106 of the first detector 102 is configured to bind a first type of target particles, but not a second type of target particles, whereas the adsorption layer of the second detector 212 is configured to bind target particles of the second type, but not target particles of the first type. For this, the adsorption layers of the first 102 and second detectors 212 comprise adsorbent molecules 122 with different functional groups 122C. The adsorption layer 106 of the first detector 102 may for example comprise adsorbent molecules 122 with a sulfonic acid group (SO₃H) that is configured to form a chemical bond with uranyl cations (UO₂²⁺), whereas the adsorption layer of the second detector 212 may for example comprise adsorbent molecules with a crown ether such as 18-crown-6 ether that is configured to bind ²²⁶Ra in its cavity. The detection system 200 can thus be used to simultaneously detect different radioisotopes in the sample medium provided to the inner volume 204. To read out a measurement signal from the second detector 212, the electrical connector 210 comprises a second pair of pins (not shown).

In other examples, the detectors 102 and 212 may have adsorption layers configured to bind the same type of target particles. Furthermore, a distance between the detectors 102 and 212 may be chosen to be sufficiently small such that the detector 212 can detect ionizing radiation emitted by a target particle 108 bound to the adsorption layer 106 of the first detector 102 and vice versa. In this way, the active area for adsorbing target particles 108 as well as the solid angle covered by the detectors 102 and 212 may be increased. In one example, the distance between the detection surfaces of the detectors 102 and 212 may be between 1 µm and 30 µm, e.g. 10 µm. If the detectors 102 and 212 are to bind target particles of different types as described above, on the other hand, the distance between the detection surfaces of the detectors 102 and 212 is preferably chosen to be larger than a penetration depth of the ionizing radiation in the medium contained in the inner volume 204. For alpha particles, the range in water may for example be on the order of 10 µm to 100 µm. Accordingly, the distance between the detection surfaces of the detectors 102 and 212 may for example be larger than 1 mm.

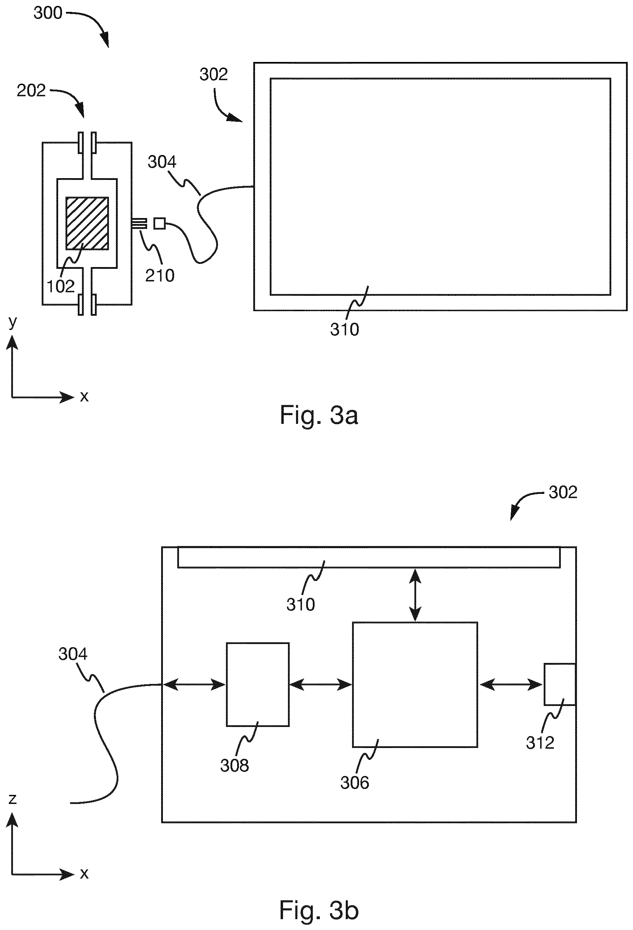

Figs. 3a and 3b depict another example of a detection system 300 for ionizing radiation. Fig. 3a shows a sectional top view of the detection system 300 in the x-y plane parallel a detection surface of the detection system 300 and Fig. 3b shows a sectional side view of a portion of the detection system 300 in the x-z plane perpendicular to the detection surface of the detection system 300.

The detection system 300 comprises a flow cell, in which a detector 102 is mounted. The flow cell may e.g. be the flow cell 202 and in particular comprises an inner volume 204 and two connectors 206A, 206B in communication with the inner volume 204 as well as an electrical connector 210. The detector 102 is a semiconductor charge-particle detector similar to the detector 102 of Fig. 1a or Fig. 1b and also comprises a detection surface 102A (not shown), on which an adsorption layer 106 that is configured to bind target particles 108 is provided.

The detection system 300 further comprises a measuring device 302 that is configured to read out a measurement signal from the detector 102. For this, the measuring device 302 can be connected to the electrical connector 210 of the flow cell 202 via a cable 304. This modular setup allows for using the measuring device 302 with a plurality of flow cells, e.g. to examine different samples and/or use flow cells with different detectors 102. The measuring device 302 comprises a controller 306, which is configured to read out the measurement signal from the detector 102 by measuring an electric current through the detector 102 using a measurement instrument 308, e.g. a voltmeter or ammeter. The measurement instrument 308 is further configured to apply a bias voltage to the detector 102.

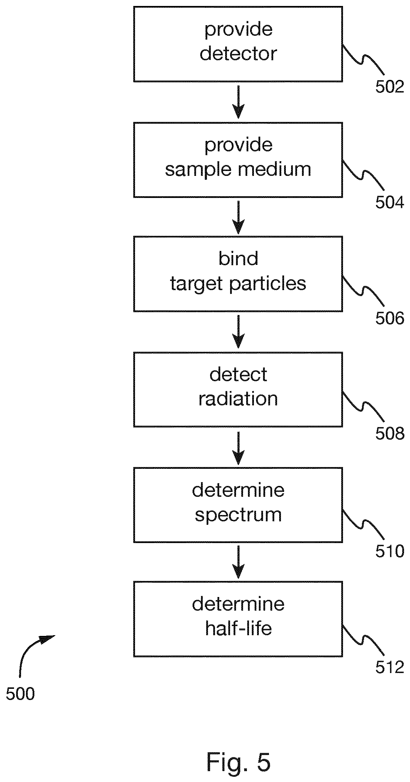

As described above, whenever an ionizing particle enters the detection zone 102B of the detector 102, the ionizing particle may generate electron-hole pairs giving rise to an electric current. The resulting electric current spike or pulse, also referred to as an event in the following, is detected by the measurement instrument 308. The number of electron-hole pairs generated by the ionizing particle and thus the time-integrated electric current of the event may depend on the energy of the ionizing particle. The controller 306 is configured to determine an energy of the ionizing particle from the time-integrated electric current of the respective event, e.g. using a predetermined calibration curve. The controller 306 is further configured to determine an arrival time of the ionizing particle as well as to store an event sequence containing the determined energy and the arrival time of the detected events. The controller 306 is also configured to determine an energy spectrum of the ionizing radiation incident on the detector 102 from the event sequence, wherein the energy spectrum contains a number of events as a function of the energy associated with the event, e.g. as detailed below with reference to Fig. 5. The controller 306 is further configured to determine the half-life of a substance from the event sequence by determining a rate of events as a function of time and determining the associated decay constant, e.g. as detailed below with reference to Fig. 5. The controller 306 may be implemented in hardware, software or a combination thereof and may for example comprise a processor and a set of instructions to be executed by the processor to provide the functionality described above.

The measuring device 302 further comprises a display 310 that is configured to display information to a user, e.g. a current status of the measuring device 302, results of a measurement and/or an illustration of the event sequence and/or the energy spectrum. In the example shown in Fig. 3a and 3b, the display 310 is a touchscreen that is configured to receive a user input, e.g. to initiate a measurement or to change settings of the measuring device 302. The measuring device 302 also comprises a communication module 312 that is configured to exchange data with a computing device. The communication module 312 may for example comprise an USB port, a LAN port, a Wi-Fi module, a Bluetooth module or a combination thereof. The controller 306 is configured to provide the event sequence, energy spectrum and/or half-life via the communication module 312 as well as to receive commands via the communication module 312, e.g. to initiate a measurement or to change settings of the measuring device 302. In addition, the measuring device 302 has a battery (not shown) such that the measuring device 302 can be used without an external power supply.

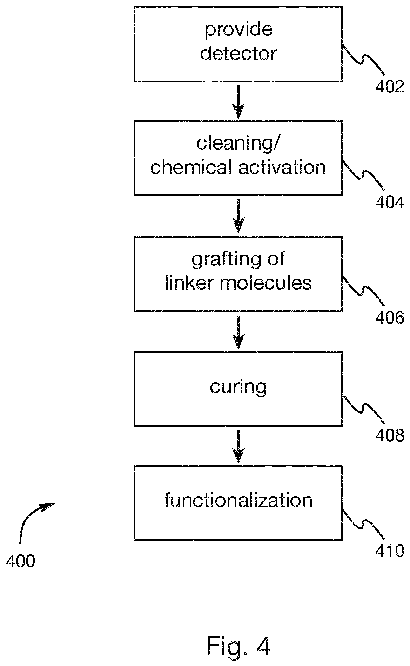

Fig. 4 depicts a flowchart of a method 400 of manufacturing a detection system for ionizing radiation according to an exemplary embodiment of the invention. The method 400 may be used to deposit an adsorption layer 106 onto the detection surface 102A of a detector 102, wherein the adsorption layer 106 is configured to bind radioactive target particles 108. The method 400 may for example be used to manufacture the detection system 120 having an unsealed semiconductor diode as the detector 102 and is explained in the following with reference to Fig. 1b. This is, however, not intended to be limiting in any way and the method 400 may be used to manufacture other detection systems having a detector with a detection surface that is configured to detect ionizing radiation, for example the detection systems 100, 200, and 300, noting that the method of manufacturing a detection system for ionizing radiation as claimed is limited to embodiments in which the detector is mounted in a flow cell and is a first detector with an adsorption layer configured to bind target particles of a first type but not target particles of a second type, wherein the detection system further comprises a second detector mounted in the flow cell and having a detection surface with an adsorption layer configured to bind target particles of the second type but not target particles of the first type. Furthermore, the flowchart in Fig. 4 is for illustration only and does not imply a certain order of execution of the method 400. As far as technically feasible, steps of the method 400 may be permuted and may in particular be performed simultaneously at least in part.

In step 402, the detector 102 with the detection surface 102A is provided, wherein the detector 102 is configured to detect ionizing radiation that is incident on the detection surface 102A. In the example of Fig. 1b, the detector 102 is an unsealed silicon PIN diode with a silicon dioxide layer forming the detection surface 102A. Accordingly, the semiconductor structure as well as metallic contacts and conduction lines of the detector 102 are exposed at least in part. In order to not damage the detector 102, the method 400 employs a sequence of processing steps 404 to 410, which are optimized to minimize the impact on the detector 102.

After the detector 102 has been provided, the detection surface 102A is cleaned and chemically activated in step 404. For this, the detection surface 102A is exposed to a low-pressure water plasma, e.g. by placing the detector 102 in a vacuum chamber evacuated to a pressure between 10⁻³ to 10⁻¹ mbar to which a reservoir of distilled water is connected through a valve. By opening the valve, a low-pressure water vapor is created in the vacuum chamber with a pressure that depends on the temperature of the vacuum chamber. To minimize the thermal strain on the detector 102, a temperature in the range between 10° and 40° corresponding to a vapor pressure between 12 mbar and 74 mbar may be used, preferably a temperature between 20°C and 30°C. Subsequently, a water plasma is generated in the vicinity of the detection surface 102A, e.g. using an AC or DC electromagnetic field. The detection surface 102A is for example exposed to the water plasma for between 5 min and 30 min. The water plasma may remove contaminants from the detection surface 102A and may hydrox-ylate the silicon dioxide surface, thereby creating docking sites for adsorbent molecules 122 to be grafted onto the detection surface 102A in step 406. In other examples, the detection surface 102A may additionally or alternatively be cleaned and chemically activated using ozone treatment and/or UV radiation or a different plasma, for example oxygen plasma.

Subsequently, in step 406, linker molecules are grafted onto the detection surface 102A, e.g. using chemical vapor deposition. In the example of the detection system 120, silane monomers may be used as linker molecules, e.g. (3-mercaptopropyl)trimethoxysilane (MPTMS) or (3-aminopropyl)trimethoxysilan (APTMS). To perform the chemical vapor deposition, the detector 102 is placed in a vacuum chamber to which a reservoir containing linker molecules is connected through a valve. Preferably, the same vacuum chamber is used as for the cleaning and chemical activation in step 404 to avoid having to transfer the detector 102 between vacuum chambers. The vacuum chamber is evacuated to a pressure between 0.01 mbar and 50 mbar, e.g. 10 mbar. As in step 404, thermal strain on the detector 102 may be reduced by performing the chemical vapor deposition at a low temperature, i.e. at a low vapor pressure of the linker molecules. The chemical vapor deposition may for example be performed at a vapor pressure of the linker molecules below 10 mbar, e.g. at a temperature between 30°C and 50°C. The duration of the chemical vapor deposition is chosen depending on the desired thickness of the adsorption layer 106 on the detection surface 102A and the vapor pressure of the linker molecules. The duration of the chemical vapor deposition may e.g. be between 5 minutes and 3 hours to create a silane monolayer.

After grafting the linker molecules onto the detection surface 102A, the detection surface 102A is cured in step 408 by exposing the detector 102 to water vapor at a curing temperature for a predefined curing time. The curing temperature may e.g. be between 40°C and 60°C corresponding to a water vapor pressure between 74 mbar and 200 mbar. That curing may improve the homogeneity of the adsorption layer 106 by filling vacancies within the adsorption layer 106 and/or binding or removing unbound linker molecules.

In step 410, the linker molecules are transformed to adsorbent molecules 122 by modifying a functional group of the linker molecules such that the functional group is configured to chemically bind to a target particle 108. The procedure depends on the type of linker molecules that are used as well as the desired functional group 122C of the adsorbent molecules 122. When using MPTMS, for example, the thiol end group (SH) may e.g. be oxidized to obtain a sulfonic acid group (SO₃H). In some examples, step 410 may be performed prior to the grafting of molecules onto the detection surface 102A in step 406.

After depositing the adsorption layer 106 onto the detection surface 102A, the method 400 further comprises mounting the detector 102 in a flow cell, e.g. the flow cell 202 of Fig. 2a and 2b. For this, the detector 102 may for example be attached to a side wall of the inner volume 204 of the flow cell 202, e.g. by gluing the detector 102 to the side wall and/or using a mechanical mounting structure comprising a fastener such as a hook or clip to support the detector 102. Mounting the detector 102 in the flow cell 202 may further comprise connecting contact parts of the detector 102 to the electrical connectors 210 of the flow cell 202.

Fig. 5 depicts a flowchart of a method 500 of detecting ionizing radiation in accordance with an embodiment of the invention. The method 500 may for example be executed using the detection system 300 and will be described in the following with reference to Figs. 3a and 3b. This is, however, not intended to be limiting in any way and the method 500 may be executed using other detection systems having a detector with a detection surface that is configured to detect ionizing radiation, for example the detection systems 100, 120, and 200, noting that the method of detecting ionizing radiation as claimed is limited to embodiments in which the detector is mounted in a flow cell and is a first detector with an adsorption layer configured to bind target particles of a first type but not target particles of a second type, wherein the detection system further comprises a second detector mounted in the flow cell and having a detection surface with an adsorption layer configured to bind target particles of the second type but not target particles of the first type. Furthermore, the flowchart in Fig. 5 is for illustration only and does not imply a certain order of execution of the method 500. As far as technically feasible, steps of the method 500 may be permuted and may in particular be performed simultaneously at least in part.

In step 502, a detector 102 with a detection surface 102A and an adsorption layer 106 thereon is provided, wherein the detector 102 is configured to protect ionizing radiation that is incident on the detection surface 102A and the adsorption layer 106 is configured to bind radioactive target particles 108. In case of the detection system 300, the detector 102 is provided by providing the flow cell 202 that the detector 102 is mounted in. The detector 102 is connected to the measuring device 302 by attaching the cable 304 to the electrical connector 210 of the flow cell 202.

In step 504, a sample medium containing the target particles 108 is provided such that the adsorption layer 106 of the detector 102 is in contact with the sample medium. For this, tubes are connected to the connectors 206A and 206B of the flow cell 202 to supply the sample medium to the inner volume 204 of the flow cell 202, e.g. from a sample reservoir or a syringe containing the sample medium. Depending on the type of radioisotopes to be detected and the adsorption layer 106 of the detector 102, step 504 may comprise transforming precursor radioisotopes or precursor molecules in the sample medium to target particles 108 that can be bound by the adsorption layer 106 of the detector 102. The sample medium may for example comprise a uranyl complex or a uranyl containing mineral, from which uranyl ions may be extracted to be adsorbed by suitable adsorption layer.

In step 506, target particles 108 from the sample medium are bound to the adsorption layer 106, e.g. by keeping the adsorption layer 106 in contact with the sample medium for a predefined contact time such that target particles 108 from the sample medium can form chemical bonds with the adsorption layer 106, for example through an ion exchange. The contact time is chosen depending on the kinetics of the respective binding reaction and a concentration of target particles 108 in the sample medium, e.g. to achieve a complete covering of the adsorption layer 106 with target particles 108.

In step 508, ionizing radiation incident on the detection surface 102A of the detector 102 is detected using the measuring device 302. For this, the measurement signal, i.e. the electric current through the detector 102, is read out from the detector 102 using the measuring instrument 308 during a predetermined measurement time, which may for example be chosen depending on a measured or expected event rate of the sample medium. Subsequently, the controller 306 determines an event sequence from the measurement signal as described above, i.e. the controller 306 identifies events and determines the corresponding energy and arrival time. To reduce the probability of accidentally detecting an event when no ionizing particle is present in the detection zone 102B of the detector 102, a minimum energy threshold is used, wherein only events with an energy exceeding the minimum energy threshold are considered.

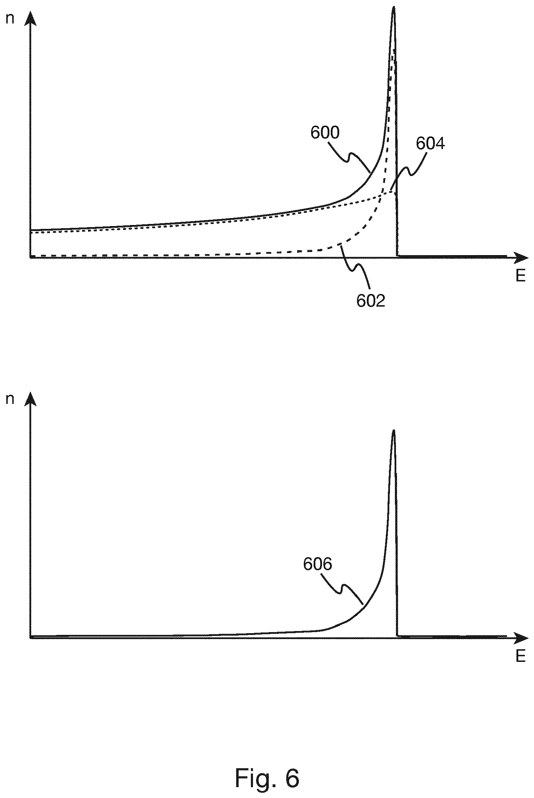

In step 510, an energy spectrum of the ionizing radiation is determined using the controller 306. To obtain the energy spectrum, the events in the event sequence are binned based on their energy and the number of events in each energy bin is determined. An exemplary energy spectrum 600 is shown in Fig. 6, which depicts the number of events n as a function of the energy E. The energy spectrum 600 contains two contributions, a resonant peak 602 and a continuous background spectrum 604. The resonant peak 602 results from ionizing radiation emitted by decaying target particles 108 that are bound to the adsorption surface 102A of the detector 102. If the target particles e.g. the flow cell 202 contain uranium, the resonant peak 602 may e.g. have its maximum at an energy of 4.27 MeV and 4.86 MeV for ²³⁸U and ²³⁴U, respectively. The continuous background spectrum 604 arises from ionizing radiation emitted by decaying target particles 108 in the sample medium. Unlike for the target particles 108 bound to the adsorption surface, the distance between the point of emission and the detection zone 102B of the detector 102 varies in this case and the spectrum is thus broadened due to scattering of the ionizing radiation between the point of emission and detection zone 102B. To extract the resonant contribution 602, the detection in step 508 may be performed after removing the sample medium from the inner volume 204. Alternatively, a background subtraction may be performed, wherein the continuous background spectrum 604 is determined approximately and subsequently subtracted from the measured spectrum 600 to obtain a background-subtracted spectrum 606, which is predominantly determined by the resonant contribution 602. The continuous background spectrum 604 can e.g. be determined approximately by fitting a suitable fit function to the measured spectrum 600 or by performing a reference measurement with a detector that does not comprise an adsorption layer.

In step 512, the half-life of a substance is determined from the event sequence. For this, a time trace of the ionizing radiation incident on the detection surface 102A is obtained by determining the rate of events, i.e. the number of events per unit of time, as a function of time. From the time trace, the half-life may for example be determined by an exponential fit. In some examples, the half-life of multiple substances may be determined, e.g. by fitting multiple exponential functions to the time trace. The energy spectrum determined in step 510 as well as the half-life determined in step 512 may allow for identifying radioisotopes present in the sample medium and the respective concentration.

In some examples, the method 500 may also comprise regenerating the detector 102, i.e. removing the target particles 108 bound to the adsorption surface 106 such that the detector 102 can be re-used for another measurement, e.g. a subsequent execution of the method 500. The detector 102 may for example be regenerated by rinsing the adsorption layer 106 with hydrochloric acid.

The method 500 may also be used to selectively detect ionizing radiation from different types of target particles, e.g. target particles comprising different types of radioisotopes. For this, the method 500 may e.g. be executed multiple times using different detectors, e.g. by providing, in step 502, a flow cell with a detector with a different adsorption layer for every execution. Alternatively, a flow cell with multiple detectors having different adsorption layers may be provided in step 502, e.g. the flow cell 202. A corresponding example in accordance with the invention is described in the following.

In this example, the two detectors 102, 212 are provided in step 502 by providing the flow cell 202. The adsorption layer 106 of the first detector 102 is configured to bind target particles of a first type, but not target particles of a second type, whereas the adsorption layer of the second detector 212 is configured to bind target particles of the second type, but not target particles of the first type. The adsorption layer 106 of the first detector 102 may for example comprise adsorbent molecules 122 with a sulfonic acid group (SO₃H) that is configured to form a chemical bond with uranyl cations (UO₂²⁺), whereas the adsorption layer of the second detector 212 may for example comprise adsorbent molecules 122 with a crown ether such as 18-crown-6 ether that is configured to bind ²²⁶Ra in its cavity.

In step 504, the sample medium is provided. The sample medium contains precursor molecules of a first type comprising a radioisotope of the first type, e.g. a uranyl compound, and precursor molecules of a second type comprising a radioisotope of the second type, e.g. a radium compound. The precursor molecules of the first type are transformed to target particles of the first type, e.g. uranyl cations, and the precursor molecules of the second type are transformed to target particles of the second type, e.g. radium ions. Subsequently, the sample medium is supplied to the inner volume 204 of the flow cell 202 to bring the sample medium in contact with the adsorption surfaces of the first detector 102 and the second detector 212.

In step 506, target particles of the first type are bound to the adsorption layer 106 of the first detector 102 and target particles of the second type are bound to the adsorption layer of the second detector 212. The selectivity of the adsorption layers and the preparation of the sample medium in step 504 ensure that only particles of the respective type are bound. In step 508, ionizing radiation incident on the detection surfaces of the detectors 102 and 212 is detected individually, thereby determining an event sequence associated with target particles of the first type and an event sequence associated with target particles of the second type. The data analysis in steps 510 and 512 can thus subsequently be performed separately for the two types of target particles.

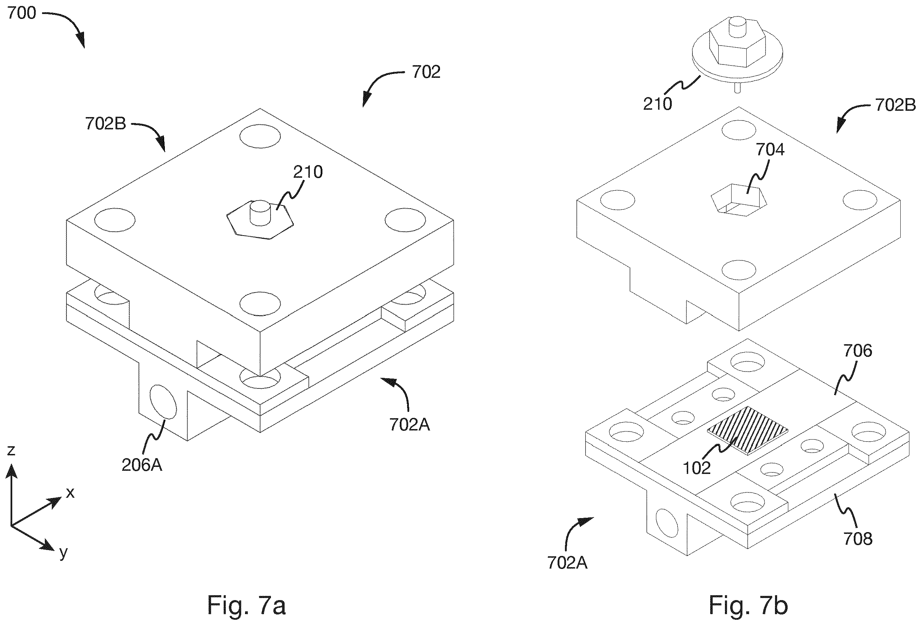

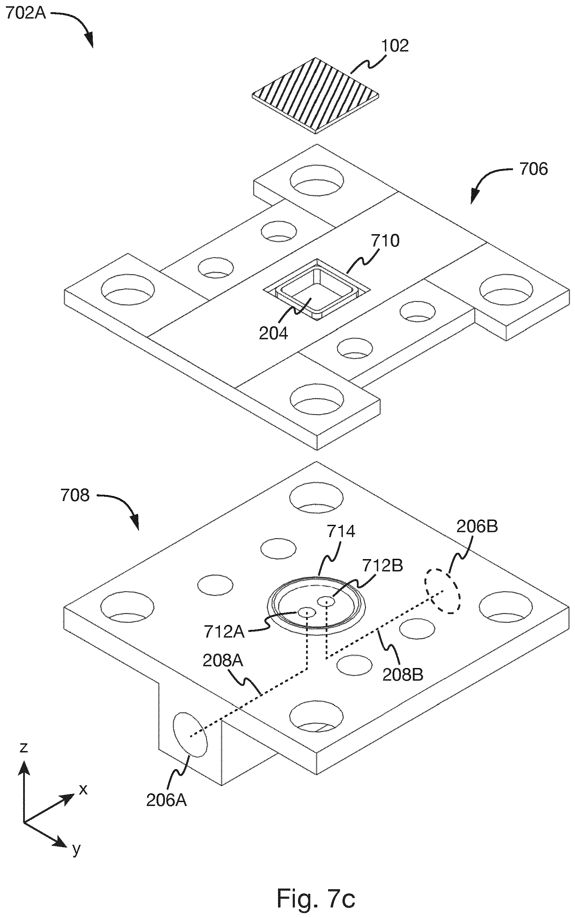

Figs. 7a-7c depict another example of a detection system 700 for ionizing radiation. Fig. 7a shows a perspective view of the detection system 700 in an assembled state. Fig. 7b depicts the detection system 700 in an exploded view and Fig. 7c depicts a bottom portion 702A of the detection system 700 in an exploded view.

The detection system 700 is similar to the detection system 200 shown in Figs. 2a and 2b and also comprises a flow cell 702, in which a detector 102 configured to detect ionizing radiation can be mounted. The flow cell 702 has a bottom portion 702A and a top portion or top plate 702B, each of which comprises a plurality of screw holes for attaching the bottom portion 702A to the top plate 702B with screws (not shown). The top plate 702B has a cut-out 704 that is configured to receive an electrical connector 210, which provides an electrical connection to the detector 102 mounted in the flow cell 702, e.g. to connect the detector 102 to an external device such as the measuring device 302.

The bottom portion 702A comprises a detector mount 706 and a bottom plate 708, each of which has a plurality of screw holes for attaching the detector mount 706 to the bottom plate 708 with screws (not shown). The detector mount 706 comprises a cut-out 710, which forms sidewalls of an inner volume 204 of the flow cell 702 when the flow cell 702 is assembled. The detector 102 is placed on the detector mount 706 such that an adsorption layer 106 on a detection surface 102A (not shown) of the detector 102 is in contact with the inner volume 204. When the flow cell 702 is assembled, the detector 102 is clamped onto the detector mount 706 by the top plate 702B. In this way, the flow cell 702 can be disassembled, e.g. to exchange the detector 102 or to remove the detector 102 for regeneration. Additionally or alternatively, the detector 102 may also be attached to the detector mount 706 by other means, e.g. glued to the detector mount 706 or mounted in a mechanical mounting structure comprising a fastener. In some examples, a gasket or seal ring (not shown) may be placed between the detector 102 and the detector mount 706 to seal off the inner volume 204.

The bottom plate 708 comprises a pair of connectors 206A and 206B arranged on opposing side faces of the bottom plate 708. The connectors 206A, 206B are in communication with the inner volume 204 via fluid channels 208A and 208B connecting the connectors 206A and 206B to openings 712A and 712B, respectively, in a center portion of a top surface of the bottom plate 708. The openings 712A, 712B are surrounded by a gasket or seal ring 714, which is configured to seal off the inner volume 204 when the detector mount 704 is placed on the bottom plate 708. The openings 712A, 712B are arranged in the inner volume such that the openings 712A, 712B face the adsorption layer 106 of the detector 102 when the flow cell 702 is assembled. This may increase a binding probability of the target particles 108 to the adsorption layer 106, in particular when providing a sample medium to the inner volume 204 with a low flow velocity, for which the flow of the sample medium may be a laminar flow.

The invention further provides a detection chamber for detecting ionizing radiation by liquid scintillation counting. The detection chamber comprises a transparent wall enclosing a detection volume, wherein the detection volume is configured to receive a fluid medium. The detection chamber further comprises an adsorption layer provided on an inner surface of the transparent wall, wherein the adsorption layer is in contact with the detection volume. The adsorption layer is configured to bind target particles, wherein the target particles are radioactive atoms or molecules.

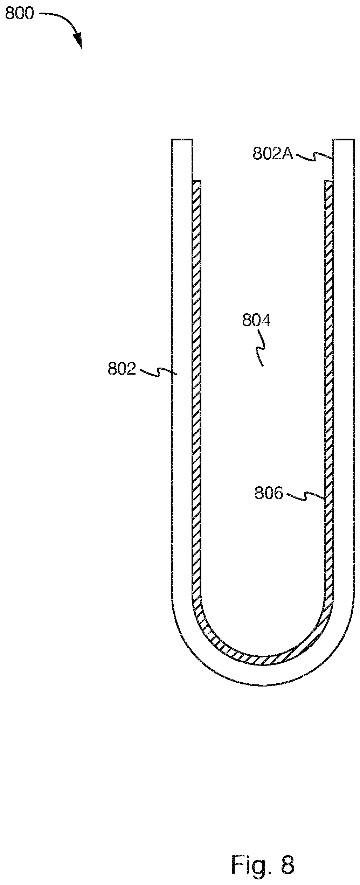

Fig. 8 depicts a schematic cross-sectional view of a detection chamber 800 for detecting ionizing radiation by liquid scintillation counting according to an exemplary embodiment of the invention. The detection chamber 800 comprises a transparent wall, which in this examples is formed by a vial or test tube 802, noting that the detection chamber for detecting ionizing radiation by liquid scintillation counting as claimed is limited to embodiments in which the detection chamber is a flow cell and comprises a first adsorption layer configured to bind target particles of a first type, but not target particles of a second type and a second adsorption layer configured to bind target particles of the second type, but not target particles of the first type. The vial 802 encloses a detection volume 804 that is configured to receive a fluid medium, in particular a liquid medium. The vial 802 may for example have a cylindrical or cuboid shape. To receive the fluid medium, the vial 802 may comprise one or more openings. The vial 802 comprises or consists of a transparent material, e.g. a glass, a transparent plastic, or a combination thereof, to allow for the detection of light emitted from the detection volume 804. Preferably, an inner surface 802A of the vial 802 that faces the detection volume 804 comprises or consists of silicon dioxide. In some examples, the vial 802 may further comprise a removable cap or cover (not shown) for sealing the detection volume 804.

An adsorption layer 806 is provided on the inner surface 802A of the vial 802 such that the adsorption layer 806 is exposed to the detection volume 804. Preferably, the adsorption layer 806 is in direct contact with the inner surface 802A, i.e. may be formed directly on the transparent wall of the detection chamber 800. The adsorption layer 806 is configured to bind target particles contained in the detection volume 804, e.g. by chemisorption. The adsorption layer 806 may for example be similar to the adsorption layer provided on the detection surface of a detection system for ionizing radiation according to one of the embodiments described above, e.g. the adsorption layer 106 of Fig. 1a or 1b, wherein the detection surface of the detector is replaced by the inner surface 802A. The adsorption layer 806 may in particular be attached to the inner surface 802A through chemical bonds between the adsorption layer 806 and the inner surface 802A and may e.g. comprise functionalized silanes and/or functionalized azides. The adsorption layer 806 may cover the entire inner surface 802A or a part thereof, e.g. between 50% and 90% of the surface area of the inner surface 802A.

In other embodiments, the detection chamber may for example be similar to the flow cell of a detection system for ionizing radiation according to one of the embodiments described above, e.g. the flow cell 202 of Figs. 2a, 2b. The flow cell 202 may for example comprise or consist of a transparent material at least in part, e.g. at least the walls surrounding the inner volume 204, which may form the detection volume. In some examples, the entire flow cell 202 may consist of a glass. The adsorption layer 806 may for example be arranged on a surface of the flow cell 202 facing the inner volume 204 similar to the detector 102 or 212 as shown in Figs. 2a, 2b. In other words, the flow cell 202 may e.g. comprise the adsorption layer 806 instead of the detectors 102 and 212, wherein the adsorption layer 806 is directly formed on an inner surface of a wall surrounding the inner volume 204.

In some examples, the detection chamber 800 may comprise a second adsorption layer (not shown) provided on the inner surface 802A of the vial 802, wherein the adsorption layer 806 may be configured to bind target particles of a first type, but not target particles of a second type, whereas the second adsorption layer may be configured to bind target particles of the second type, but not target particles of the first type, e.g. as described above.

In some embodiments, the detection chamber 800 may be part of or configured for use with a detection system (not shown) comprising a detector that is configured to detect light emitted from the detection volume 804, e.g. as a result of scintillation induced by ionizing radiation emitted by target particles. The detection system may for example comprise a measuring device such as a liquid scintillation counter, wherein the measuring device may be configured to removably receive the detection chamber 800. The measuring device may e.g. comprise a photodetector, in particular a photomultiplier tube, configured to detect light emitted from the detection volume 804 when the detection chamber 800 is arranged in the measuring device. The measuring device may for example comprise a slot or mount that is configured to receive the vial 802 such that the photodetector faces the vial 802.The measuring device may be similar to the measuring device 302 of the detection system 300 described above and may e.g. further comprise a controller configured to read out a measurement signal from the photodetector, wherein the controller may e.g. be similar to the controller 306. The controller may in particular be configured to determine a count rate and/or an energy spectrum of the ionizing radiation.

The invention further provides a method of detecting ionizing radiation by liquid scintillation counting. The method comprises (1) providing a detection chamber enclosing a detection volume configured to receive a fluid medium. An adsorption layer is provided on an inner surface of the detection chamber, the adsorption layer being in contact with the detection volume. The adsorption layer is configured to bind target particles, wherein the target particles are radioactive atoms or molecules. The method further comprises (2) binding target particles to the adsorption layer; (3) providing a fluid detection medium in the detection volume such that the adsorption layer is in contact with the detection medium, wherein the detection medium comprises a scintillating substance; and (4) detecting ionizing radiation in the detection volume by detecting light emitted by the scintillating substance. The numbering of steps is for clarity only and does not imply a certain order of execution of the method. As far as technically feasible, steps of the method may be permuted and may in particular be performed simultaneously at least in part.

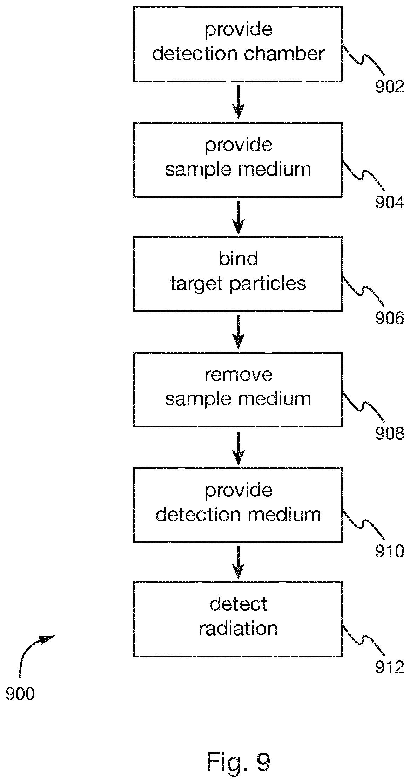

Fig. 9 shows a flowchart of a method 900 of detecting ionizing radiation by liquid scintillation counting according an exemplary embodiment of the invention. The method 900 is described in the following using the detection chamber 800 of Fig. 8 as an example for illustration purposes. This is, however, not intended to be limiting in any way and the method 900 may be executed using a different detection chamber, in particular using any other detection chamber for detecting ionizing radiation by liquid scintillation counting according to one of the embodiments described herein, noting that the method of detecting ionizing radiation by liquid scintillation counting as claimed is limited to embodiments in which the detection chamber is a flow cell and comprises a first adsorption layer configured to bind target particles of a first type, but not target particles of a second type and a second adsorption layer configured to bind target particles of the second type, but not target particles of the first type. Furthermore, the method 900 is not limited to the order of execution shown in the flow chart of Fig. 9.

The method 900 comprises, in step 902, providing a detection chamber with an adsorption layer on an inner surface thereof, e.g. by providing the detection chamber 800. In some examples, this may comprise depositing the adsorption layer 806 on the inner surface 802A, e.g. similar to the method of manufacturing a detection system for ionizing radiation according to one of the embodiments described above. Preferably, the vial 802 is provided with the adsorption layer 806 already formed thereon.

In step 904, a fluid sample medium is provided in the detection volume 804 such that the adsorption layer 806 is in contact with the sample medium, e.g. similar to step 506 of method 500. This may for example comprise filling the liquid or gaseous sample medium into the vial 802. The sample medium may contain radioactive target particles and the method 900 may for example be used to detect the presence of the target particles in the sample medium and in particular to determine a concentration of the target particles in the sample medium. In one example, the sample medium is a water sample and the target particles comprise a radionuclide such as radium.

In some examples, the sample medium may initially contain precursors of the target particles, e.g. precursor radioisotopes or precursor molecules comprising a radioisotope. Providing the sample medium in step 904 may comprise transforming the precursor radioisotopes or precursor molecules to the target particles, e.g. as described above. This may in particular comprise adding a transforming solution to the sample medium, wherein the transforming solution may e.g. comprise a transforming reagent configured to transform the precursors from a chemical state in which the precursors do not bind to the adsorption layer 806 to a chemical state in which the precursors/target particles bind to the adsorption layer 806. In some examples, the transforming solution may additionally or alternatively be configured to transform particles that are not target particles to a chemical state in which the non-target particles do not bind to the adsorption layer 806. Preferably, the transforming solution comprises a mineral acid such as sulfuric acid, hydrochloric acid, and/or nitric acid. The transforming solution may for example be added to the sample medium up to a pre-defined concentration or until a pre-defined pH value is reached. The transforming solution may be added after or preferably prior to providing the sample medium in the detection volume 804.

In step 906, target particles from the sample medium are bound to the adsorption layer 806, e.g. similar to step 508 of method 500. This may for example comprise holding the sample medium in the detection volume 804 for a time sufficient to allow the target particles to bind to the adsorption layer, e.g. between 5 min and 30 min.

Subsequently, the sample medium may be removed from the detection volume in step 908, preferably prior to providing the detection medium in step 910. In some examples, this may comprise rinsing the detection volume 804 with a buffer solution and/or with the detection medium. This may in particular comprise removing target particles that are not bound to the adsorption layer 806 from the detection volume 804.

In step 910, a fluid detection medium is provided in the detection volume 804 such that the adsorption layer 806 is in contact with the fluid detection medium. The fluid detection medium comprises a scintillating substance, i.e. a substance exhibiting luminescence upon excitation by ionizing radiation, in particular alpha and/or beta particles. The scintillating substance may for example be a liquid scintillation cocktail comprising a scintillator dissolved in an organic solvent, wherein the organic solvent may e.g. be configured to absorb an ionizing particle and transfer at least a part of the absorbed energy to the scintillator, which in turn may emit a photon by fluorescence or phosphorescence, preferably in the visible spectrum. The scintillator may for example comprise one or more substances selected from the group consisting of 2,5-Diphenyloxazole (PPO), 2-(4-Biphenylyl)-5-phenyl-1,3,4-oxadiazole (PBD), p-terphenyl, and Zinc sulfide. The organic solvent may for example comprise one or more substances selected from the group consisting of toluene, xylene, 1,2,4-Trimethylbenzene, diisopropylnaphthalene (DIPN), phenylxylylethane (PXE), and linear alkyl benzene (LAB). In some examples, the scintillating substance may also comprise a secondary scintillator or wavelength shifter. In step 912, ionizing radiation is detected in the detection volume 804 by detecting light emitted by the scintillating substance, i.e. while the detection medium is held in the detection volume. The ionizing radiation may in particular be ionizing radiation emitted into the detection volume 804 by target particles bound to the adsorption layer 806. The ionizing radiation may for example be detected with a photodetector such as a photomultiplier tube, for example in a liquid scintillation counter. Accordingly, step 912 may e.g. comprise closing the vial 802 and placing the vial in the liquid scintillation counter. In some examples, step 912 may also comprise determining a count rate and/or an energy spectrum of the ionizing radiation and/or a concentration of target particles in the sample medium.

By using a detection system with a selective adsorption layer for the target particles as described above, the method allows for detecting ionizing radiation from target particles by liquid scintillation counting without requiring a complicated sample preparation as in methods known from the prior art. The latter may for example involve one or more radiochemical separation processes to prepare a sample medium that is subsequently mixed with a liquid scintillation cocktail. This may lead to quenching effects due to the presence of contaminating substances in the sample medium. Furthermore, some or all of the above steps of the method according to the invention can be automated easily, thereby allowing for a fast and parallel-ized processing of a large number of samples.

Embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

100 - detection system
102 - detector
102A - detection surface
102B - detection zone
104 - metallic contacts
106 - adsorption layer
108 - target particle
110 - chemical bond between target particle 108 and adsorption layer 106
dₛ - thickness of adsorption layer 106
120 - detection system
122 - adsorbent molecule
122A - head group
122B - linker chain
122C - functional group
200 - detection system
202 - flow cell
204 - inner volume
206A/B - fluid connectors
208A/B - fluid channels
210 - electrical connector
212 - second detector
212A - detection surface of second detector 212
300 - detection system
302 - measuring device
304 - cable
306 - controller
308 - measurement instrument
310 - display
312 - communication module
400 - method of manufacturing a detection system
402 - step of providing detector
404 - step of chemically activating detection surface
406 - step of grafting linker molecules onto detection surface
408 - step of curing detection surface
410 - step of transforming linker molecules to adsorbent molecules
500 - method of detecting ionizing radiation
502 - step of providing detector
504 - step of providing sample medium
506 - step of binding target particles to adsorption layer
508 - step of detecting ionizing radiation with detector
510 - step of determining energy spectrum of ionizing radiation
512 - step of determining half-life of substance
600 - energy spectrum of ionizing radiation
602 - resonant peak
604 - continuous background spectrum
606 - background-subtracted energy spectrum
700 - detection system
702 - flow cell
702A - bottom portion of flow cell 702
702B - top portion of flow cell 702
704 - cut-out in top portion 702B
706 - detector mount
708 - bottom plate
710 - cut-out in detector mount 706
712A/B - opening in bottom plate 708
714 - gasket
800 - detection chamber
802 -vial/transparent wall
802A - inner surface of vial 802
804 - detection volume
806 - adsorption layer
900 - method of detecting ionizing radiation by liquid scintillation counting
902 - step of providing a detection chamber
904 - step of providing a fluid sample medium
906 - step of binding target particles to the adsorption layer
908 - step of removing the sample medium
910 - step of providing a fluid detection medium
912 - step of detecting ionizing radiation

## Claims

1. A detection system (100, 120, 200, 300, 700) for ionizing radiation, the detection system (100, 120, 200, 300, 700) comprising:
a flow cell (202, 702) with an inner volume (204), an input fluid connector (206A) and an output fluid connector (206B), the input and output fluid connectors (206A, 206B) being in communication with the inner volume (204) of the flow cell (202, 702) and being configured to receive a sample medium; and
a detector (102) with a detection surface (102A), wherein the detector (102) is configured to detect ionizing radiation that is incident on the detection surface (102A) and an adsorption layer (106) is provided on said detection surface (102A), the adsorption layer (106) being configured to bind target particles (108), wherein the target particles (108) are radioactive atoms or molecules, wherein the detector (102) is mounted in the flow cell (202, 702) such that the adsorption layer (106) of the detector (102) is in contact with the inner volume (204) of the flow cell (202, 702), **characterized in that**
the detector is a first detector (102) and the detection system (200) further comprises a second detector (212), wherein the second detector (212) is configured to detect ionizing radiation that is incident on a detection surface (212A) of the second detector (212) and the second detector (212) is mounted in the flow cell (202) such that the detection surface (212A) of the second detector (212) is in contact with the inner volume (204) of the flow cell (202); and
the target particles (108) are target particles of a first type; the adsorption layer (106) of the first detector (102) is configured to bind target particles of the first type, but not target particles of a second type; and an adsorption layer is provided on the detection surface (212A) of the second detector (212), the adsorption layer being configured to bind target particles of the second type, but not target particles of the first type.

2. The detection system (100, 120, 200, 300, 700) of claim 1, wherein:
the adsorption layer (106) of the first detector (102) is configured to bind the target particles (108) of the first type by chemisorption; and/or
the adsorption layer (106) of the first detector (102) is attached to the detection surface (102A) of the first detector (102) through chemical bonds between the adsorption layer (106) and the detection surface (102A); and/or
a thickness (dₛ) of the adsorption layer (106) of the first detector (102) is less than 20 nm, preferably less than 10 nm; and/or
the adsorption layer (106) of the first detector (102) is a monomolecular layer of adsorbent molecules (122), in particular ion exchangers or complexing agents, wherein the adsorbent molecules (122) are configured to form chemical bonds with the target particles (108) of the first type.

3. The detection system (100, 120, 200, 300, 700) of claim 1 or 2, wherein:
the first detector (102) is configured to detect x-ray photons and/or alpha particles that are incident on the detection surface (102A) of the first detector (102) and the target particles (108) of the first type are x-ray-emitting and/or alpha-emitting particles; and/or
the first detector (102) is a semiconductor charged-particle detector, in particular a silicon charged-particle detector; and/or
the adsorption layer (106) of the first detector (102) comprises functionalized silanes and/or functionalized azides; and/or
the input and/or output fluid connector (206A, 206B) is/are configured to be connected to a fluid connector of another flow cell; and/or
the flow cell (202, 702) comprises an electrical connector (210) that is electrically coupled to the first detector (102) and is configured to be removably connected to an external device such that the first detector (102) is electrically coupled to the external device.

4. The detection system (300) of any one of the preceding claims, further comprising a measuring device (302) with a controller (306), wherein the controller (306) is configured to read out a measurement signal from the first detector (102) when the first detector (102) is electrically coupled to the measuring device (302), in particular wherein the controller (302) is configured to determine:
an energy spectrum of the ionizing radiation incident on the detection surface (102A) of the first detector (102) from the measurement signal of the first detector (102); and/or
a time trace of the ionizing radiation incident on the detection surface (102A) of the first detector (102) from the measurement signal of the first detector (102).

5. The detection system (200) of any one of the preceding claims, wherein the detection surface (212A) of the second detector (212) faces the detection surface (102A) of the first detector (102).

6. A method (400) of manufacturing a detection system (100, 120, 200, 300, 700) for ionizing radiation, the method (400) comprising:
providing a detector (102) with a detection surface (102A), wherein the detector (102) is configured to detect ionizing radiation that is incident on the detection surface (102A);
depositing an adsorption layer (106) onto the detection surface (102A), the adsorption layer (106) being configured to bind target particles (108), wherein
the target particles (108) are radioactive atoms or molecules; and
mounting the detector (102) in a flow cell (202, 702) such that the detection surface (102A) of the detector (102) is in contact with an inner volume (204) of the flow cell (202, 702),
wherein:
the flow cell (202, 702) comprises an input fluid connector (206A) and an output fluid connector (206B), the input and output fluid connectors (206A, 206B) being in communication with the inner volume (204) of the flow cell (202, 702) and being configured to receive a sample medium;
**characterized in that** the detector is a first detector (102) and the detection system (200) further comprises a second detector (212), wherein the second detector (212) is configured to detect ionizing radiation that is incident on a detection surface (212A) of the second detector (212) and the second detector (212) is mounted in the flow cell (202) such that the detection surface (212A) of the second detector (212) is in contact with the inner volume (204) of the flow cell (202); and
the target particles (108) are target particles of a first type; the adsorption layer (106) of the first detector (102) is configured to bind target particles of the first type, but not target particles of a second type; and an adsorption layer is provided on the detection surface (212A) of the second detector (212), the adsorption layer being configured to bind target particles of the second type, but not target particles of the first type.

7. The method (400) of claim 6, wherein depositing the adsorption layer (106) onto the detection surface (102A) of the first detector (102) comprises:
grafting adsorbent molecules (122), in particular ion exchangers or complexing agents, onto the detection surface (102A), wherein the adsorbent molecules (122) are configured to chemically bind to the target particles (108) of the first type;
in particular wherein:
the adsorption layer (106) is a monomolecular layer of the adsorbent molecules (122); and/or
the adsorbent molecules (122) are grafted by chemical vapor deposition at a temperature between 20°C and 70°C, preferably between 30°C and 50°C; and/or
grafting the adsorbent molecules (122) onto the detection surface (102A) comprises grafting linker molecules onto the detection surface (102A) and transforming the linker molecules to the adsorbent molecules (122) by modifying a functional group (122C) of the linker molecules such that the functional group (122C) is configured to chemically bind to a target particle (108) of the first type.

8. The method (400) of claim 6 or 7, wherein:
depositing the adsorption layer (106) onto the detection surface (102A) of the first detector (102) further comprises curing the detection surface (102A) in the presence of water vapor at a temperature between 30°C and 70°C, preferably between 40°C and 60°C; and/or
the first detector (102) is an unsealed semiconductor diode, in particular a silicon PIN diode; and/or
the adsorption layer (106) of the first detector (102) comprises a functionalized silane or a functionalized azide.

9. The method (400) of any one of claims 6 to 8, further comprising chemically activating the detection surface (102A) of the first detector (102) by plasma treatment, ozone treatment, UV irradiation or a combination thereof, wherein preferably chemically activating the detection surface (102A) comprises exposing the detection surface (102A) to a water plasma, in particular wherein the detection surface (102A) is exposed to the water plasma at a temperature between 10°C and 40°C, preferably between 20°C and 30°C.

10. A method (500) of detecting ionizing radiation, the method (500) comprising:
providing a detection system (100, 120, 200, 300, 700) according to any one of claims 1 to 5;
binding target particles (108) of the first type to the adsorption layer (106) of the first detector (102); and
detecting ionizing radiation incident on the detection surface (102A) of the first detector (102) with the first detector (102).

11. The method (500) of claim 10, wherein:
the target particles (108) of the first type are bound to the adsorption layer (106) of the first detector (102) by chemisorption; and/or
the method (500) further comprises providing a fluid sample medium containing the target particles (108) of the first type such that the adsorption layer (106) of the first detector (102) is in contact with the sample medium, in particular wherein binding the target particles (108) of the first type to the adsorption layer (106) of the first detector (102) comprises an ion exchange between the adsorption layer (106) and the sample medium and/or wherein the sample medium contains precursor radioisotopes or precursor molecules comprising a radioisotope and providing the fluid sample comprises transforming the precursor radioisotopes or precursor molecules to the target particles (108) of the first type; and/or
the method (500) further comprises connecting the flow cell (202, 702) to a measuring device (302) that is configured to read out a measurement signal from the first detector (102); and/or
the method (500) further comprises determining an energy spectrum of the ionizing radiation incident on the detection surface (102A) of the first detector (102), in particular wherein the method (500) further comprises determining a continuous background spectrum in the measured energy spectrum and subtracting the continuous background spectrum from the measured energy spectrum.

12. The method (500) of claim 10 or 11, wherein the method further comprises:
binding target particles of the second type to the adsorption layer of the second detector (212); and
detecting ionizing radiation incident on the detection surface (212A) of the second detector (212) with the second detector (212),
in particular wherein the method (500) further comprises transforming precursor radio-isotopes of a first type or precursor molecules comprising a radioisotope of the first type to target particles of the first type and transforming precursor radioisotopes of a second type or precursor molecules comprising a radioisotope of the second type to target particles of the second type.

13. A detection chamber (800) for detecting ionizing radiation by liquid scintillation counting, the detection chamber (800) comprising:
a transparent wall (802) enclosing a detection volume (804), wherein the detection volume (804) is configured to receive a fluid medium; and
an adsorption layer (806) provided on an inner surface (802A) of the transparent wall (802), the adsorption layer (806) being in contact with the detection volume (804) and configured to bind target particles (108), wherein the
target particles (108) are radioactive atoms or molecules,
wherein:
the detection chamber (800) is configured for use with a detection system comprising a detector that is configured to detect light emitted from the detection volume (804);
the detection chamber (800) is a flow cell (202, 702) with an input fluid connector (206A) and an output fluid connector (206B), the input and output fluid connectors (206A, 206B) being in communication with the detection volume (204, 804) of the flow cell (202, 702) and being configured to receive a sample medium; and
**characterized in that**
the adsorption layer (806) is a first adsorption layer (806) configured to bind target particles of a first type, but not target particles of a second type and the detection chamber (800) further comprises a second adsorption layer provided on the inner surface (802A) of the transparent wall (802), the second adsorption layer being configured to bind target particles of the second type, but not target particles of the first type.

14. A method (900) of detecting ionizing radiation by liquid scintillation counting, the method (900) comprising:
providing a detection chamber (800) enclosing a detection volume (804) configured to receive a fluid medium, wherein an adsorption layer (806) is provided on an inner surface (802A) of the detection chamber (800), the adsorption layer (806) being in contact with the detection volume (804) and configured to bind target particles (108), wherein the target particles (108) are radioactive atoms or molecules;
binding target particles (108) to the adsorption layer (806);
providing a fluid detection medium in the detection volume (804) such that the adsorption layer (806) is in contact with the detection medium, wherein the detection medium comprises a scintillating substance; and
detecting ionizing radiation in the detection volume (804) by detecting light emitted by the scintillating substance,
wherein:
the detection chamber (800) is a flow cell (202, 702) with an input fluid connector (206A) and an output fluid connector (206B), the input and output fluid connectors (206A, 206B) being in communication with the detection volume (204, 804) of the flow cell (202, 702) and being configured to receive a sample medium; and
**characterized in that**
the target particles (108) are target particles of a first type; the adsorption layer (806) is a first adsorption layer (806) configured to bind target particles of the first type, but not target particles of a second type and the detection chamber (800) further comprises a second adsorption layer provided on the inner surface (802A) of the transparent wall (802), the second adsorption layer being configured to bind target particles of the second type, but not target particles of the first type.

15. The method (900) of claim 14, wherein:
the method (900) further comprises providing a fluid sample medium containing the target particles (108) of the first type in the detection volume (804) such that the first adsorption layer (806) is in contact with the sample medium to allow the target particles (108) of the first type to bind to the first adsorption layer (806) and removing the sample medium from the detection volume (804) prior to providing the detection medium; and/or
the sample medium contains precursor radioisotopes or precursor molecules comprising a radioisotope and providing the sample medium comprises transforming the precursor radioisotopes or precursor molecules to the target particles (108) of the first type.

## Patentansprüche

1. Detektionssystem (100, 120, 200, 300, 700) für ionisierende Strahlung, wobei das Detektionssystem (100, 120, 200, 300, 700) Folgendes umfasst:
eine Durchflusszelle (202, 702) mit einem Innenvolumen (204), einem Eingangsfluidanschluss (206A) und einem Ausgangsfluidanschluss (206B), wobei der Eingangs- und der Ausgangsfluidanschluss (206A, 206B) mit dem Innenvolumen (204) der Durchflusszelle (202, 702) in Verbindung stehen und dazu eingerichtet sind, ein Probenmedium aufzunehmen; und
einen Detektor (102) mit einer Detektionsfläche (102A), wobei der Detektor (102) dazu eingerichtet ist, ionisierende Strahlung zu detektieren, die auf die Detektionsfläche (102A) einfällt, und eine Adsorptionsschicht (106) auf der Detektionsfläche (102A) bereitgestellt ist, wobei die Adsorptionsschicht (106) dazu eingerichtet ist, Zielpartikel (108) zu binden, wobei die Zielpartikel (108) radioaktive Atome oder Moleküle sind, wobei der Detektor (102) derart in der Durchflusszelle (202, 702) angebracht ist, dass die Adsorptionsschicht (106) des Detektors (102) mit dem Innenvolumen (204) der Durchflusszelle (202, 702) in Kontakt steht,
**dadurch gekennzeichnet, dass**
der Detektor ein erster Detektor (102) ist und das Detektionssystem (200) ferner einen zweiten Detektor (212) umfasst, wobei der zweite Detektor (212) dazu eingerichtet ist, ionisierende Strahlung zu detektieren, die auf eine Detektionsfläche (212A) des zweiten Detektors (212) einfällt, und der zweite Detektor (212) derart in der Durchflusszelle (202) angebracht ist, dass die Detektionsfläche (212A) des zweiten Detektors (212) mit dem Innenvolumen (204) der Durchflusszelle (202) in Kontakt steht; und
die Zielpartikel (108) Zielpartikel eines ersten Typs sind; die Adsorptionsschicht (106) des ersten Detektors (102) dazu eingerichtet ist, Zielpartikel des ersten Typs, aber nicht Zielpartikel eines zweiten Typs zu binden; und eine Adsorptionsschicht auf der Detektionsfläche (212A) des zweiten Detektors (212) bereitgestellt ist, wobei die Adsorptionsschicht dazu eingerichtet ist, Zielpartikel des zweiten Typs, aber nicht Zielpartikel des ersten Typs zu binden.

2. Detektionssystem (100, 120, 200, 300, 700) nach Anspruch 1, wobei:
die Adsorptionsschicht (106) des ersten Detektors (102) dazu eingerichtet ist, die Zielpartikel (108) des ersten Typs durch Chemisorption zu binden; und/oder
die Adsorptionsschicht (106) des ersten Detektors (102) an der Detektionsfläche (102A) des ersten Detektors (102) durch chemische Bindungen zwischen der Adsorptionsschicht (106) und der Detektionsfläche (102A) befestigt ist; und/oder
eine Dicke (dₛ) der Adsorptionsschicht (106) des ersten Detektors (102) weniger als 20 nm, vorzugsweise weniger als 10 nm, beträgt; und/oder
die Adsorptionsschicht (106) des ersten Detektors (102) eine monomolekulare Schicht von adsorbierenden Molekülen (122), insbesondere Ionenaustauschern oder Komplexbildnern, ist, wobei die adsorbierenden Moleküle (122) dazu eingerichtet sind, chemische Bindungen mit den Zielpartikeln (108) des ersten Typs zu bilden.

3. Detektionssystem (100, 120, 200, 300, 700) nach Anspruch 1 oder 2, wobei:
der erste Detektor (102) dazu eingerichtet ist, Röntgenphotonen und/oder Alphapartikel zu detektieren, die auf die Detektionsfläche (102A) des ersten Detektors (102) einfallen, und die Zielpartikel (108) des ersten Typs röntgenstrahlemittierende und/oder alphastrahlemittierende Partikel sind; und/oder
der erste Detektor (102) ein Halbleiterdetektor für geladene Teilchen, insbesondere ein Siliziumdetektor für geladene Teilchen, ist; und/oder
die Adsorptionsschicht (106) des ersten Detektors (102) funktionalisierte Silane und/oder funktionalisierte Azide umfasst; und/oder
der Eingangs- und/oder der Ausgangsfluidanschluss (206A, 206B) dazu eingerichtet ist/sind, mit einem Fluidanschluss einer anderen Durchflusszelle verbunden zu werden; und/oder
die Durchflusszelle (202, 702) einen elektrischen Anschluss (210) umfasst, der elektrisch mit dem ersten Detektor (102) gekoppelt ist und dazu eingerichtet ist, entfernbar mit einer externen Vorrichtung verbunden zu werden, so dass der erste Detektor (102) elektrisch mit der externen Vorrichtung gekoppelt ist.

4. Detektionssystem (300) nach einem der vorhergehenden Ansprüche, ferner umfassend eine Messvorrichtung (302) mit einer Steuerung (306), wobei die Steuerung (306) dazu eingerichtet ist, ein Messsignal von dem ersten Detektor (102) auszulesen, wenn der erste Detektor (102) elektrisch mit der Messvorrichtung (302) gekoppelt ist, insbesondere wobei die Steuerung (302) dazu eingerichtet ist, Folgendes zu bestimmen:
ein Energiespektrum der ionisierenden Strahlung, die auf die Detektionsfläche (102A) des ersten Detektors (102) einfällt, aus dem Messsignal des ersten Detektors (102); und/oder
einen Zeitverlauf der ionisierenden Strahlung, die auf die Detektionsfläche (102A) des ersten Detektors (102) einfällt, aus dem Messsignal des ersten Detektors (102).

5. Detektionssystem (200) nach einem der vorhergehenden Ansprüche, wobei die Detektionsfläche (212A) des zweiten Detektors (212) der Detektionsfläche (102A) des ersten Detektors (102) zugewandt ist.

6. Verfahren (400) zum Herstellen eines Detektionssystems (100, 120, 200, 300, 700) für ionisierende Strahlung, wobei das Verfahren (400) Folgendes umfasst:
Bereitstellen eines Detektors (102) mit einer Detektionsfläche (102A), wobei der Detektor (102) dazu eingerichtet ist, ionisierende Strahlung zu detektieren, die auf die Detektionsfläche (102A) einfällt;
Abscheiden einer Adsorptionsschicht (106) auf der Detektionsfläche (102A), wobei die Adsorptionsschicht (106) dazu eingerichtet ist, Zielpartikel (108) zu binden, wobei die Zielpartikel (108) radioaktive Atome oder Moleküle sind; und
Anbringen des Detektors (102) in einer Durchflusszelle (202, 702) derart, dass die Detektionsfläche (102A) des Detektors (102) mit einem Innenvolumen (204) der Durchflusszelle (202, 702) in Kontakt steht,
wobei:
die Durchflusszelle (202, 702) einen Eingangsfluidanschluss (206A) und einen Ausgangsfluidanschluss (206B) umfasst, wobei der Eingangs- und der Ausgangsfluidanschluss (206A, 206B) mit dem Innenvolumen (204) der Durchflusszelle (202, 702) in Verbindung stehen und dazu eingerichtet sind, ein Probenmedium aufzunehmen;
**dadurch gekennzeichnet, dass**
der Detektor ein erster Detektor (102) ist und das Detektionssystem (200) ferner einen zweiten Detektor (212) umfasst, wobei der zweite Detektor (212) dazu eingerichtet ist, ionisierende Strahlung zu detektieren, die auf eine Detektionsfläche (212A) des zweiten Detektors (212) einfällt, und der zweite Detektor (212) derart in der Durchflusszelle (202) angebracht ist, dass die Detektionsfläche (212A) des zweiten Detektors (212) mit dem Innenvolumen (204) der Durchflusszelle (202) in Kontakt steht; und
die Zielpartikel (108) Zielpartikel eines ersten Typs sind; die Adsorptionsschicht (106) des ersten Detektors (102) dazu eingerichtet ist, Zielpartikel des ersten Typs, aber nicht Zielpartikel eines zweiten Typs zu binden; und eine Adsorptionsschicht auf der Detektionsfläche (212A) des zweiten Detektors (212) bereitgestellt ist, wobei die Adsorptionsschicht dazu eingerichtet ist, Zielpartikel des zweiten Typs, aber nicht Zielpartikel des ersten Typs zu binden.

7. Verfahren (400) nach Anspruch 6, wobei das Abscheiden der Adsorptionsschicht (106) auf der Detektionsfläche (102A) des ersten Detektors (102) umfasst:
Graften von adsorbierenden Molekülen (122), insbesondere Ionenaustauschern oder Komplexbildnern, auf die Detektionsfläche (102A), wobei die adsorbierenden Moleküle (122) dazu eingerichtet sind, chemisch an die Zielpartikel (108) des ersten Typs zu binden;
insbesondere wobei:
die Adsorptionsschicht (106) eine monomolekulare Schicht der adsorbierenden Moleküle (122) ist; und/oder
die adsorbierenden Moleküle (122) durch chemische Gasphasenabscheidung bei einer Temperatur zwischen 20 °C und 70 °C, vorzugsweise zwischen 30 °C und 50 °C, gegraftet werden; und/oder
das Graften der adsorbierenden Moleküle (122) auf die Detektionsfläche (102A) das Graften von Linkermolekülen auf die Detektionsfläche (102A) und das Umwandeln der Linkermoleküle in die adsorbierenden Moleküle (122) durch Modifizieren einer funktionellen Gruppe (122C) der Linkermoleküle umfasst, so dass die funktionelle Gruppe (122C) dazu eingerichtet ist, chemisch an ein Zielpartikel (108) des ersten Typs zu binden.

8. Verfahren (400) nach Anspruch 6 oder 7, wobei:
das Abscheiden der Adsorptionsschicht (106) auf der Detektionsfläche (102A) des ersten Detektors (102) ferner das Aushärten der Detektionsfläche (102A) in Gegenwart von Wasserdampf bei einer Temperatur zwischen 30 °C und 70 °C, vorzugsweise zwischen 40 °C und 60 °C, umfasst; und/oder
der erste Detektor (102) eine unversiegelte Halbleiterdiode, insbesondere eine Silizium-PIN-Diode, ist; und/oder
die Adsorptionsschicht (106) des ersten Detektors (102) ein funktionalisiertes Silan oder ein funktionalisiertes Azid umfasst.

9. Verfahren (400) nach einem der Ansprüche 6 bis 8, ferner umfassend das chemische Aktivieren der Detektionsfläche (102A) des ersten Detektors (102) durch Plasmabehandlung, Ozonbehandlung, UV-Bestrahlung oder eine Kombination davon, wobei vorzugsweise das chemische Aktivieren der Detektionsfläche (102A) das Aussetzen der Detektionsfläche (102A) einem Wasserplasma umfasst, insbesondere wobei die Detektionsfläche (102A) dem Wasserplasma bei einer Temperatur zwischen 10 °C und 40 °C, vorzugsweise zwischen 20 °C und 30 °C, ausgesetzt wird.

10. Verfahren (500) zum Detektieren ionisierender Strahlung, wobei das Verfahren (500) Folgendes umfasst:
Bereitstellen eines Detektionssystems (100, 120, 200, 300, 700) nach einem der Ansprüche 1 bis 5;
Binden von Zielpartikeln (108) des ersten Typs an die Adsorptionsschicht (106) des ersten Detektors (102); und
Detektieren ionisierender Strahlung, die auf die Detektionsfläche (102A) des ersten Detektors (102) einfällt, mit dem ersten Detektor (102).

11. Verfahren (500) nach Anspruch 10, wobei:
die Zielpartikel (108) des ersten Typs durch Chemisorption an die Adsorptionsschicht (106) des ersten Detektors (102) gebunden werden; und/oder
das Verfahren (500) ferner das Bereitstellen eines fluiden Probenmediums umfasst, das die Zielpartikel (108) des ersten Typs enthält, so dass die Adsorptionsschicht (106) des ersten Detektors (102) in Kontakt mit dem Probenmedium ist, insbesondere wobei das Binden der Zielpartikel (108) des ersten Typs an die Adsorptionsschicht (106) des ersten Detektors (102) einen Ionenaustausch zwischen der Adsorptionsschicht (106) und dem Probenmedium umfasst und/oder wobei das Probenmedium Vorläufer-Radioisotope oder Vorläufer-Moleküle enthält, die ein Radioisotop umfassen, und das Bereitstellen der fluiden Probe das Umwandeln der Vorläufer-Radioisotope oder Vorläufer-Moleküle in die Zielpartikel (108) des ersten Typs umfasst; und/oder
das Verfahren (500) ferner das Verbinden der Durchflusszelle (202, 702) mit einer Messvorrichtung (302) umfasst, die dazu eingerichtet ist, ein Messsignal aus dem ersten Detektor (102) auszulesen; und/oder
das Verfahren (500) ferner das Bestimmen eines Energiespektrums der ionisierenden Strahlung umfasst, die auf die Detektionsfläche (102A) des ersten Detektors (102) einfällt, insbesondere wobei das Verfahren (500) ferner das Bestimmen eines kontinuierlichen Hintergrundspektrums in dem gemessenen Energiespektrum und das Subtrahieren des kontinuierlichen Hintergrundspektrums von dem gemessenen Energiespektrum umfasst.

12. Verfahren (500) nach Anspruch 10 oder 11, wobei das Verfahren ferner umfasst:
Binden von Zielpartikeln des zweiten Typs an die Adsorptionsschicht des zweiten Detektors (212); und
Detektieren ionisierender Strahlung, die auf die Detektionsfläche (212A) des zweiten Detektors (212) einfällt, mit dem zweiten Detektor (212),
insbesondere wobei das Verfahren (500) ferner das Umwandeln von Vorläufer-Radioisotopen eines ersten Typs oder Vorläufer-Molekülen, die ein Radioisotop des ersten Typs umfassen, in Zielpartikel des ersten Typs und das Umwandeln von Vorläufer-Radioisotopen eines zweiten Typs oder Vorläufer-Molekülen, die ein Radioisotop des zweiten Typs umfassen, in Zielpartikel des zweiten Typs umfasst.

13. Detektionskammer (800) zum Detektieren ionisierender Strahlung durch Flüssigkeitsszintillationszählen, wobei die Detektionskammer (800) Folgendes umfasst:
eine transparente Wand (802), die ein Detektionsvolumen (804) umschließt, wobei das Detektionsvolumen (804) dazu eingerichtet ist, ein Fluidmedium aufzunehmen; und
eine Adsorptionsschicht (806), die auf einer Innenfläche (802A) der transparenten Wand (802) bereitgestellt ist, wobei die Adsorptionsschicht (806) mit dem Detektionsvolumen (804) in Kontakt steht und dazu eingerichtet ist, Zielpartikel (108) zu binden, wobei die Zielpartikel (108) radioaktive Atome oder Moleküle sind,
wobei:
die Detektionskammer (800) zur Verwendung mit einem Detektionssystem eingerichtet ist, das einen Detektor umfasst, der dazu eingerichtet ist, von dem Detektionsvolumen (804) emittiertes Licht zu detektieren;
die Detektionskammer (800) eine Durchflusszelle (202, 702) mit einem Eingangsfluidanschluss (206A) und einem Ausgangsfluidanschluss (206B) ist, wobei der Eingangs- und der Ausgangsfluidanschluss (206A, 206B) mit dem Detektionsvolumen (204, 804) der Durchflusszelle (202, 702) in Verbindung stehen und dazu eingerichtet sind, ein Probenmedium aufzunehmen; und
**dadurch gekennzeichnet, dass**
die Adsorptionsschicht (806) eine erste Adsorptionsschicht (806) ist, die dazu eingerichtet ist, Zielpartikel eines ersten Typs, aber nicht Zielpartikel eines zweiten Typs zu binden, und die Detektionskammer (800) ferner eine zweite Adsorptionsschicht umfasst, die auf der Innenfläche (802A) der transparenten Wand (802) bereitgestellt ist, wobei die zweite Adsorptionsschicht dazu eingerichtet ist, Zielpartikel des zweiten Typs, aber nicht Zielpartikel des ersten Typs zu binden.

14. Verfahren (900) zum Detektieren ionisierender Strahlung durch Flüssigkeitsszintillationszählen, wobei das Verfahren (900) Folgendes umfasst:
Bereitstellen einer Detektionskammer (800), die ein Detektionsvolumen (804) umschließt, das dazu eingerichtet ist, ein Fluidmedium aufzunehmen, wobei eine Adsorptionsschicht (806) auf einer Innenfläche (802A) der Detektionskammer (800) bereitgestellt ist, wobei die Adsorptionsschicht (806) mit dem Detektionsvolumen (804) in Kontakt steht und dazu eingerichtet ist, Zielpartikel (108) zu binden, wobei die Zielpartikel (108) radioaktive Atome oder Moleküle sind;
Binden von Zielpartikeln (108) an die Adsorptionsschicht (806);
Bereitstellen eines fluiden Detektionsmediums in dem Detektionsvolumen (804), so dass die Adsorptionsschicht (806) mit dem Detektionsmedium in Kontakt steht, wobei das Detektionsmedium eine szintillierende Substanz umfasst; und
Detektieren ionisierender Strahlung in dem Detektionsvolumen (804) durch Detektieren von durch die szintillierende Substanz emittiertem Licht,
wobei:
die Detektionskammer (800) eine Durchflusszelle (202, 702) mit einem Eingangsfluidanschluss (206A) und einem Ausgangsfluidanschluss (206B) ist, wobei der Eingangs- und der Ausgangsfluidanschluss (206A, 206B) mit dem Detektionsvolumen (204, 804) der Durchflusszelle (202, 702) in Verbindung stehen und dazu eingerichtet sind, ein Probenmedium aufzunehmen; und
**dadurch gekennzeichnet, dass**
die Adsorptionsschicht (806) eine erste Adsorptionsschicht (806) ist, die dazu eingerichtet ist, Zielpartikel des ersten Typs, aber nicht Zielpartikel eines zweiten Typs zu binden, und die Detektionskammer (800) ferner eine zweite Adsorptionsschicht umfasst, die auf der Innenfläche (802A) der transparenten Wand (802) bereitgestellt ist, wobei die zweite Adsorptionsschicht dazu eingerichtet ist, Zielpartikel des zweiten Typs, aber nicht Zielpartikel des ersten Typs zu binden.

15. Verfahren (900) nach Anspruch 14, wobei:
das Verfahren (900) ferner das Bereitstellen eines fluiden Probenmediums, das die Zielpartikel (108) des ersten Typs enthält, in dem Detektionsvolumen (804) umfasst, so dass die erste Adsorptionsschicht (806) mit dem Probenmedium in Kontakt steht, um zu ermöglichen, dass die Zielpartikel (108) des ersten Typs an die erste Adsorptionsschicht (806) binden, und das Entfernen des Probenmediums aus dem Detektionsvolumen (804) vor dem Bereitstellen des Detektionsmediums; und/oder
das Probenmedium Vorläufer-Radioisotope oder Vorläufer-Moleküle enthält, die ein Radioisotop umfassen, und das Bereitstellen des Probenmediums das Umwandeln der Vorläufer-Radioisotope oder Vorläufer-Moleküle in die Zielpartikel (108) des ersten Typs umfasst.

## Revendications

1. Système de détection (100, 120, 200, 300, 700) pour un rayonnement ionisant, le système de détection (100, 120, 200, 300, 700) comprenant :
une cellule d'écoulement (202, 702) avec un volume interne (204), un connecteur de fluide d'entrée (206A) et un connecteur de fluide de sortie (206B), les connecteurs de fluide d'entrée et de sortie (206A, 206B) étant en communication avec le volume interne (204) de la cellule d'écoulement (202, 702) et étant configurés pour recevoir un milieu échantillon ; et
un détecteur (102) avec une surface de détection (102A), dans lequel le détecteur (102) est configuré pour détecter un rayonnement ionisant qui est incident sur la surface de détection (102A) et une couche d'adsorption (106) est prévue sur ladite surface de détection (102A), la couche d'adsorption (106) étant configurée pour lier des particules cibles (108), dans lequel les particules cibles (108) sont des atomes radioactifs ou des molécules, dans lequel le détecteur (102) est monté dans la cellule d'écoulement (202, 702) de sorte que la couche d'adsorption (106) du détecteur (102) est en contact avec le volume interne (204) de la cellule d'écoulement (202, 702),
**caractérisé en ce que** :
le détecteur est un premier détecteur (102) et le système de détection (200) comprend en outre un second détecteur (212), dans lequel le second détecteur (212) est configuré pour détecter un rayonnement ionisant qui est incident sur une surface de détection (212A) du second détecteur (212) et le second détecteur (212) est monté dans la cellule d'écoulement (202) de sorte que la surface de détection (212A) du second détecteur (212) est en contact avec le volume interne (204) de la cellule d'écoulement (202) ; et
les particules cibles (108) sont des particules cibles d'un premier type ; la couche d'adsorption (106) du premier détecteur (102) est configurée pour lier des particules cibles du premier type, mais pas des particules cibles d'un second type ; et une couche d'adsorption est prévue sur la surface de détection (212A) du second détecteur (212), la couche d'adsorption étant configurée pour lier des particules cibles du second type, mais pas des particules cibles du premier type.

2. Système de détection (100, 120, 200, 300, 700) selon la revendication 1, dans lequel :
la couche d'adsorption (106) du premier détecteur (102) est configurée pour lier les particules cibles (108) du premier type par chimisorption ; et/ou
la couche d'adsorption (106) du premier détecteur (102) est fixée à la surface de détection (102A) du premier détecteur (102) par l'intermédiaire de liaisons chimiques entre la couche d'adsorption (106) et la surface de détection (102A) ; et/ou
une épaisseur (dₛ) de la couche d'adsorption (106) du premier détecteur (102) est inférieure à 20 nm, de préférence inférieure à 10 nm ; et/ou
la couche d'adsorption (106) du premier détecteur (102) est une couche monomoléculaire de molécules adsorbantes (122), en particulier des échangeurs d'ions ou des agents complexants, dans lequel les molécules adsorbantes (122) sont configurées pour former des liaisons chimiques avec les particules cibles (108) du premier type.

3. Système de détection (100, 120, 200, 300, 700) selon la revendication 1 ou 2, dans lequel:
le premier détecteur (102) est configuré pour détecter des photons de rayons X et/ou des particules alpha qui sont incidents sur la surface de détection (102A) du premier détecteur (102) et les particules cibles (108) du premier type sont des particules émettrices de rayons X et/ou émettrices d'alpha ; et/ou
le premier détecteur (102) est un détecteur de particules chargées à semi-conducteur, en particulier un détecteur de particules chargées de silicium ; et/ou
la couche d'adsorption (106) du premier détecteur (102) comprend des silanes fonctionnalisés et/ou des azotures fonctionnalisés ; et/ou le connecteur de fluide d'entrée et/ou de sortie (206A, 206B) est/sont configurés pour être connectés à un connecteur de fluide d'une autre cellule d'écoulement ; et/ou
la cellule d'écoulement (202, 702) comprend un connecteur électrique (210) qui est couplé électriquement au premier détecteur (102) et est configuré pour être connecté de manière amovible à un dispositif externe de sorte que le premier détecteur (102) est couplé électriquement au dispositif externe.

4. Système de détection (300) selon l'une quelconque des revendications précédentes, comprenant en outre un dispositif de mesure (302) avec un dispositif de commande (306), dans lequel le dispositif de commande (306) est configuré pour lire un signal de mesure à partir du premier détecteur (102) lorsque le premier détecteur (102) est couplé électriquement au dispositif de mesure (302), en particulier dans lequel le dispositif de commande (302) est configuré pour déterminer :
un spectre d'énergie du rayonnement ionisant incident sur la surface de détection (102A) du premier détecteur (102) à partir du signal de mesure du premier détecteur (102) ; et/ou
une trace temporelle du rayonnement ionisant incident sur la surface de détection (102A) du premier détecteur (102) à partir du signal de mesure du premier détecteur (102).

5. Système de détection (200) selon l'une quelconque des revendications précédentes, dans lequel la surface de détection (212A) du second détecteur (212) fait face à la surface de détection (102A) du premier détecteur (102).

6. Procédé (400) de fabrication d'un système de détection (100, 120, 200, 300, 700) pour un rayonnement ionisant, le procédé (400) comprenant :
la fourniture d'un détecteur (102) avec une surface de détection (102A), dans lequel le détecteur (102) est configuré pour détecter un rayonnement ionisant qui est incident sur la surface de détection (102A) ;
le dépôt d'une couche d'adsorption (106) sur la surface de détection (102A), la couche d'adsorption (106) étant configurée pour lier des particules cibles (108), dans lequel les particules cibles (108) sont des atomes radioactifs ou des molécules ; et
le montage du détecteur (102) dans une cellule d'écoulement (202, 702) de sorte que la surface de détection (102A) du détecteur (102) est en contact avec un volume interne (204) de la cellule d'écoulement (202, 702),
dans lequel :
la cellule d'écoulement (202, 702) comprend un connecteur de fluide d'entrée (206A) et un connecteur de fluide de sortie (206B), les connecteurs de fluide d'entrée et de sortie (206A, 206B) étant en communication avec le volume interne (204) de la cellule d'écoulement (202, 702) et étant configurés pour recevoir un milieu échantillon ;
**caractérisé en ce que** le détecteur est un premier détecteur (102) et le système de détection (200) comprend en outre un second détecteur (212), dans lequel le second détecteur (212) est configuré pour détecter un rayonnement ionisant qui est incident sur une surface de détection (212A) du second détecteur (212) et le second détecteur (212) est monté dans la cellule d'écoulement (202) de sorte que la surface de détection (212A) du second détecteur (212) est en contact avec le volume interne (204) de la cellule d'écoulement (202) ; et
les particules cibles (108) sont des particules cibles d'un premier type ; la couche d'adsorption (106) du premier détecteur (102) est configurée pour lier des particules cibles du premier type, mais pas des particules cibles d'un second type ; et une couche d'adsorption est prévue sur la surface de détection (212A) du second détecteur (212), la couche d'adsorption étant configurée pour lier des particules cibles du second type, mais pas des particules cibles du premier type.

7. Procédé (400) selon la revendication 6, dans lequel le dépôt de la couche d'adsorption (106) sur la surface de détection (102A) du premier détecteur (102) comprend :
le greffage de molécules adsorbantes (122), en particulier des échangeurs d'ions ou des agents complexants, sur la surface de détection (102A), dans lequel les molécules adsorbantes (122) sont configurées pour se lier chimiquement aux particules cibles (108) du premier type ;
en particulier dans lequel :
la couche d'adsorption (106) est une couche monomoléculaire des molécules adsorbantes (122) ; et/ou
les molécules adsorbantes (122) sont greffées par dépôt chimique en phase vapeur à une température comprise entre 20 °C et 70 °C, de préférence entre 30 °C et 50 °C ; et/ou
le greffage des molécules adsorbantes (122) sur la surface de détection (102A) comprend le greffage de molécules de liaison sur la surface de détection (102A) et la transformation des molécules de liaison en molécules adsorbantes (122) par modification d'un groupe fonctionnel (122C) des molécules de liaison de sorte que le groupe fonctionnel (122C) est configuré pour se lier chimiquement à une particule cible (108) du premier type.

8. Procédé (400) selon la revendication 6 ou 7, dans lequel :
le dépôt de la couche d'adsorption (106) sur la surface de détection (102A) du premier détecteur (102) comprend en outre le durcissement de la surface de détection (102A) en présence de vapeur d'eau à une température comprise entre 30 °C et 70 °C, de préférence entre 40 °C et 60 °C ; et/ou
le premier détecteur (102) est une diode à semi-conducteur non scellée, en particulier une diode PIN de silicium ; et/ou
la couche d'adsorption (106) du premier détecteur (102) comprend un silane fonctionnalisé ou un azoture fonctionnalisé.

9. Procédé (400) selon l'une quelconque des revendications 6 à 8, comprenant en outre l'activation chimique de la surface de détection (102A) du premier détecteur (102) par traitement au plasma, traitement à l'ozone, irradiation UV ou une combinaison de ceux-ci, dans lequel de préférence l'activation chimique de la surface de détection (102A) comprend l'exposition de la surface de détection (102A) à un plasma d'eau, en particulier dans lequel la surface de détection (102A) est exposée au plasma d'eau à une température comprise entre 10 °C et 40 °C, de préférence entre 20 °C et 30 °C.

10. Procédé (500) de détection d'un rayonnement ionisant, le procédé (500) comprenant :
la fourniture d'un système de détection (100, 120, 200, 300, 700) selon l'une quelconque des revendications 1 à 5 ;
la liaison de particules cibles (108) du premier type à la couche d'adsorption (106) du premier détecteur (102) ; et
la détection d'un rayonnement ionisant incident sur la surface de détection (102A) du premier détecteur (102) avec le premier détecteur (102).

11. Procédé (500) selon la revendication 10, dans lequel :
les particules cibles (108) du premier type sont liées à la couche d'adsorption (106) du premier détecteur (102) par chimisorption ; et/ou
le procédé (500) comprend en outre la fourniture d'un milieu échantillon fluide contenant les particules cibles (108) du premier type de sorte que la couche d'adsorption (106) du premier détecteur (102) est en contact avec le milieu échantillon, en particulier dans lequel la liaison des particules cibles (108) du premier type à la couche d'adsorption (106) du premier détecteur (102) comprend un échange d'ions entre la couche d'adsorption (106) et le milieu échantillon et/ou dans lequel le milieu échantillon contient des radio-isotopes précurseurs ou des molécules précurseurs comprenant un radio-isotope et la fourniture de l'échantillon fluide comprend la transformation des radio-isotopes précurseurs ou des molécules précurseurs en particules cibles (108) du premier type ; et/ou
le procédé (500) comprend en outre la connexion de la cellule d'écoulement (202, 702) à un dispositif de mesure (302) qui est configuré pour lire un signal de mesure à partir du premier détecteur (102) ; et/ou
le procédé (500) comprend en outre la détermination d'un spectre d'énergie du rayonnement ionisant incident sur la surface de détection (102A) du premier détecteur (102), en particulier dans lequel le procédé (500) comprend en outre la détermination d'un spectre de fond continu dans le spectre d'énergie mesuré et la soustraction du spectre de fond continu du spectre d'énergie mesuré.

12. Procédé (500) selon la revendication 10 ou 11, dans lequel le procédé comprend en outre :
la liaison de particules cibles du second type à la couche d'adsorption du second détecteur (212) ; et
la détection d'un rayonnement ionisant incident sur la surface de détection (212A) du second détecteur (212) avec le second détecteur (212),
en particulier dans lequel le procédé (500) comprend en outre la transformation de radio-isotopes précurseurs d'un premier type ou de molécules précurseurs comprenant un radio-isotope du premier type en particules cibles du premier type et la transformation de radio-isotopes précurseurs d'un second type ou de molécules précurseurs comprenant un radio-isotope du second type en particules cibles du second type.

13. Chambre de détection (800) pour détecter un rayonnement ionisant par comptage par scintillation liquide, la chambre de détection (800) comprenant :
une paroi transparente (802) enfermant un volume de détection (804), dans laquelle le volume de détection (804) est configuré pour recevoir un milieu fluide ; et
une couche d'adsorption (806) prévue sur une surface interne (802A) de la paroi transparente (802), la couche d'adsorption (806) étant en contact avec le volume de détection (804) et configurée pour lier des particules cibles (108), dans laquelle les particules cibles (108) sont des atomes radioactifs ou des molécules, dans lequel :
la chambre de détection (800) est configurée pour être utilisée avec un système de détection comprenant un détecteur qui est configuré pour détecter une lumière émise à partir du volume de détection (804) ;
la chambre de détection (800) est une cellule d'écoulement (202, 702) avec un connecteur de fluide d'entrée (206A) et un connecteur de fluide de sortie (206B), les connecteurs de fluide d'entrée et de sortie (206A, 206B) étant en communication avec le volume de détection (204, 804) de la cellule d'écoulement (202, 702) et étant configurés pour recevoir un milieu échantillon ; et
**caractérisé en ce que** la couche d'adsorption (806) est une première couche d'adsorption (806) configurée pour lier des particules cibles d'un premier type, mais pas des particules cibles d'un second type et la chambre de détection (800) comprend en outre une seconde couche d'adsorption prévue sur la surface interne (802A) de la paroi transparente (802), la seconde couche d'adsorption étant configurée pour lier des particules cibles du second type, mais pas des particules cibles du premier type.

14. Procédé (900) de détection d'un rayonnement ionisant par comptage par scintillation liquide, le procédé (900) comprenant :
la fourniture d'une chambre de détection (800) enfermant un volume de détection (804) configuré pour recevoir un milieu fluide, dans lequel une couche d'adsorption (806) est prévue sur une surface interne (802A) de la chambre de détection (800), la couche d'adsorption (806) étant en contact avec le volume de détection (804) et configurée pour lier des particules cibles (108), dans lequel les particules cibles (108) sont des atomes radioactifs ou des molécules ;
la liaison de particules cibles (108) à la couche d'adsorption (806) ;
la fourniture d'un milieu de détection fluide dans le volume de détection (804) de sorte que la couche d'adsorption (806) est en contact avec le milieu de détection, dans lequel le milieu de détection comprend une substance scintillante ; et
la détection d'un rayonnement ionisant dans le volume de détection (804) en détectant une lumière émise par la substance scintillante,
dans lequel :
la chambre de détection (800) est une cellule d'écoulement (202, 702) avec un connecteur de fluide d'entrée (206A) et un connecteur de fluide de sortie (206B), les connecteurs de fluide d'entrée et de sortie (206A, 206B) étant en communication avec le volume de détection (204, 804) de la cellule d'écoulement (202, 702) et étant configurés pour recevoir un milieu échantillon ; et
**caractérisé en ce que** les particules cibles (108) sont des particules cibles d'un premier type ; la couche d'adsorption (806) est une première couche d'adsorption (806) configurée pour lier des particules cibles du premier type, mais pas des particules cibles d'un second type et la chambre de détection (800) comprend en outre une seconde couche d'adsorption prévue sur la surface interne (802A) de la paroi transparente (802), la seconde couche d'adsorption étant configurée pour lier des particules cibles du second type, mais pas des particules cibles du premier type.

15. Procédé (900) selon la revendication 14, dans lequel :
le procédé (900) comprend en outre la fourniture d'un milieu échantillon fluide contenant les particules cibles (108) du premier type dans le volume de détection (804) de sorte que la première couche d'adsorption (806) est en contact avec le milieu échantillon pour permettre aux particules cibles (108) du premier type de se lier à la première couche d'adsorption (806) et le retrait du milieu échantillon du volume de détection (804) avant la fourniture du milieu de détection ; et/ou
le milieu échantillon contient des radio-isotopes précurseurs ou des molécules précurseurs comprenant un radio-isotope et la fourniture du milieu échantillon comprend la transformation des radio-isotopes précurseurs ou des molécules précurseurs en particules cibles (108) du premier type.
